# EUROPÄISCHE PATENTANMELDUNG

(11) **EP 3 985 379 A1**
(43) Veröffentlichungstag der Anmeldung: **20.04.2022**
(21) Anmeldenummer: 20201533.5
(22) Anmeldetag: 13.10.2020
(51) Int. Cl.: G01N 15/06, G01N 1/22, G01N 15/08

(54) **VORRICHTUNG UND VERFAHREN ZUR MESSUNG EINER IN SITU SIMULIERTEN VIRUSAUSBREITUNG IN AEROSOLEN**

(71) Anmelder: Charité - Universitätsmedizin Berlin, 10117 Berlin (DE)
(72) Erfinder: Kertzscher, Ulrich, 10713 Berlin (DE); Lommel, Michael, 10179 Berlin (DE); Bierewitz, Tim, 10965 Berlin (DE); Froese, Vera, 10967 Berlin (DE)
(74) Vertreter: Hertin und Partner Rechts- und Patentanwälte PartG mbB

(57) **Zusammenfassung**

Die Erfindung betrifft eine Vorrichtung zur konduktometrischen Messung einer in situ simulierten Virusausbreitung in Aerosolen, wobei die Vorrichtung einen Aerosol-Generator zum Ausstoß von Aerosolen mit leitfähigen Aerosol-Partikeln und einen Teil zum Aufnehmen und konduktometrischen Messen der leitfähigen Aerosol-Partikel, dem Absorber, umfasst. In weiteren Teilaspekten bezieht sich die Erfindung auf ein Verfahren zur konduktometrischen Messung einer in situ simulierten Virenausbreitung in Aerosolen. Die Erfindung bezieht sich ferner auf eine entsprechende medizinisch-indizierte Anwendung der Vorrichtung. Die Anwendung ermöglicht, in situ die Ausbreitung und Übertragung von Viren eines infizierten Menschen auf einen Menschen zu simulieren. Die in situ simulierten Viren sind Viren, die Infektionskrankheiten auslösen, wie z.B., nicht ausschließlich, COVID-19.

## Beschreibung

Die Erfindung betrifft eine Vorrichtung zur konduktometrischen Messung einer in situ simulierten Virusausbreitung in Aerosolen, wobei die Vorrichtung einen Aerosol-Generator zum Ausstoß von Aerosolen mit leitfähigen Aerosol-Partikeln und einen Teil zum Aufnehmen und konduktometrischen Messen der leitfähigen Aerosol-Partikel, dem Absorber, umfasst. In weiteren Teilaspekten bezieht sich die Erfindung auf ein Verfahren zur konduktometrischen Messung einer in situ simulierten Virenausbreitung in Aerosolen. Die Erfindung bezieht sich ferner auf eine entsprechende medizinisch-indizierte Anwendung der Vorrichtung. Die Anwendung ermöglicht, in situ die Ausbreitung und Übertragung von Viren eines infizierten Menschen auf einen Menschen zu simulieren. Die in situ simulierten Viren sind Viren, die Infektionskrankheiten auslösen, wie z.B., nicht ausschließlich, COVID-19.

### HINTERGRUND DER ERFINDUNG UND STAND DER TECHNIK

Gegenwärtige Studien belegen, dass humane Pathogene, insbesondere Viren, durch direkten und indirekten Kontakt, aber vor allem durch Tröpfchen und Aerosole bzw. Partikel im inhalierbaren Größenbereich (≤10 µm) übertragen werden können. Die Übertragung über lungengängige Partikel (≤4 µm), die lange Zeit in der Luft bleiben und in die Lungenalveolen eingeatmet werden können, war besonders umstritten. Bereits in den 40er Jahren des 20. Jahrhunderts wurde die Übertragung von Aerosolen zwischen Frettchen nachgewiesen, die bis zu 2,75 m voneinander entfernt waren. Neuere Tierstudien unterstützen die These der Übertragung über die Luft (d.h. durch Aerosole und/oder große Tröpfchen) über wesentlich kürzere Entfernungen von 5 cm bis etwa 1 m, wobei diese Übertragung abhängig von der Tierart war. Die Ergebnisse von Tier-Studien, in denen Influenzaviren experimentell durch Aerosole übertragen wurde, liefern indirekte Hinweise darauf, dass die Übertragung von Viren in Bevölkerungsgruppen über den Aerosolweg erfolgen könnte. Jedoch zeigen die zum Teil großen Unterschiede zwischen den Tierarten, sodass die Übertragbarkeit der Ergebnisse auf den Menschen fraglich ist.

Gegenwärtig ist die Corona-Pandemie von großer klinischer Bedeutung für zahlreiche Menschen, insbesondere mit hohem gesundheitlichen Risiko. Die Auswirkungen auf die Wirtschaft stellt ein weiterer wesentlicher Faktor dar. Der vorherrschende Übertragungsweg von SARS-CoV-2 ist nach derzeitigem Kenntnisstand über Tröpfchen und Aerosole, die durch Husten, Niesen, Atmen oder Sprechen von einer infizierten und sich im Ansteckungsstadium befindlichen Person in die Umgebungsluft abgegeben werden. Diese Tröpfchen und Aerosole werden durch die vorhandene Raumströmung in der Umgebung verteilt. Die Ausbreitung und mögliche Ansteckung über den Luftweg führen derzeit zu großer Verunsicherung in der Bevölkerung. Dabei spielen Fragen eine zentrale Rolle, wie welcher Abstand ist ausreichend und ob und welche Maske geeignet ist, eine Ansteckung zu vermeiden bzw. das Risiko einer Ansteckung zu reduzieren.

Die Übertragung von Viren auf lungengängige Partikel, die möglicherweise beim Husten, Niesen und Atmen entstehen, ist vor allem in geschlossenen Räumen ein Problem, da durch den geringen Luftaustausch diese Partikel über einen längeren Zeitraum in der Luft verbleiben können. Wäre bekannt, wie weit potenziell virenenthaltene Partikel in einer jeweiligen Konzentration sich tatsächlich ausbreiten und eine Infektionsgefahr beim Gegenüber darstellen, könnte das Infektionsrisiko korrekt eingeschätzt werden. Es könnten geeignete Richtlinien für die Prävention und wesentliche Abstands- und Maskenregeln aufgestellt werden. Maßnahmen, die die Wirtschaft betreffen, könnten auf die wesentlichen Regeln zur Infektionsvermeidung beschränkt und somit negative Auswirkungen der COVID-19 Pandemie sowie anderer Infektionskrankheiten, auf Mensch und Wirtschaft vermindert werden.

Im Stand der Technik kann die Verbreitung von Aerosolen im Raum durch Visualisierungstechniken, beispielsweise den Einsatz von Rauch- oder Nebelgeneratoren abgeschätzt werden. Diese können jedoch nur vage Anhaltspunkte bezüglich der Beurteilung von Infektionsausbreitungen geben. Eine reine Erfassung des dreidimensionalen Strömungsfeldes ist zum einen sehr aufwändig, zum anderen nur bedingt zielführend, da hierbei noch nicht das Verhalten von mit der Strömung transportierten Tröpfchen und Aerosolen unterschiedlicher Größen quantifiziert werden kann. Computergestützte Simulationsverfahren des Strömungsfeldes (Mehrphasen CFD) sind enorm rechenaufwändig und liefern nur begrenzt validierte Aussagen. So sind Maßnahmen wie periodische Ein- und Ausatemvorgänge, ein Husten / Niesen oder auch der Einfluss von Klimaanlagen, oder eines geöffneten Fensters bei CFD-Analysen in der Regel nicht zu erfassen. Darüber hinaus sind zeitlich aufgelöste CFD-Simulationen, die auch einen zeitlichen Verlauf der Akkumulation von potenziell infektiösen Tröpfchen innerhalb eines Raumes oder Phasenübergänge (Eintrocknen von Tröpfchen) darstellen können, derzeit technisch nicht realisierbar.

Die bisherige Forschung zur Prüfung von Mund-Nase-Schutzmasken stützt sich hauptsächlich auf nicht wiederholbare und nicht standardisierte Testverfahren. Nach der DIN-EN-Norm 149 wird unter anderem die Prüfung des Schutzes gegen Partikel durch Atemschutzmasken untersucht. Partikelfiltrierende Masken bedecken Nase, Mund und Kinn und können Einund/oder Ausatemventile haben. Die Maske besteht im Wesentlichen aus dem Filtermaterial oder aus einem Atemanschluss, bei dem die Filter ein Teil des Geräts sind. Die Leckage ins Innere der Maske wird an zehn fabrikneuen Mustern durch Probanden geprüft. Der Proband trägt die zu prüfende partikelfiltrierende Halbmaske und geht auf einem Laufband, über dem sich eine Abdeckung befindet. Eine 2%ige Lösung von analysereinem Natriumchlorid in destilliertem Wasser wird durch einen Zerstäuber zu einem Aerosol. Zum Messen der Natriumchlorid-Konzentration innerhalb der partikelfiltrierenden Maske wird ein Flammenfotometer verwendet. Während der Einatemphase wird durch eine Sonde, welche mittig an der Maske befestigt ist, die Probe an das Fotometer geschaltet. Dadurch kann die Filterwirkung der partikelfiltrierenden Maske bestimmt werden.

Die Bestimmung des Durchlasses von Partikelfiltern für Atemschutzgeräte ist durch die Europäische Norm EN 13274-7 festgelegt. Es werden zwei Prüfaerosole verwendet: Natriumchlorid und Paraffinöl. Das Aerosol wird in eine Prüfkammer geleitet, in der der Partikelfilter an einem Adapter befestigt ist. Das Aerosol wird dann durch den Partikelfilter geleitet und die Konzentration vor und nach dem Partikelfilter durch ein Photometer gemessen. Die Filterleistung von Gesichtsmasken wird bisher nach der DIN-Norm EN 14683:2019+AC:2019 überprüft und orientiert sich an der Leistungsfähigkeit bei Verwendung als Barriere gegen bakterielle Penetration. Das Verfahren für die in vitro-Bestimmung der bakteriellen Filterleistung (BFE) erfolgt durch das Einspannen einer Probe des Maskenmaterials zwischen einem sechsstufigen Kaskaden-Aufprallgerät und einer Aerosol-Kammer. Das Aerosol wird mit dem Bakterium Staphylococcus aureus angereichert. Mit Hilfe eines Vakuums wird das Aerosol durch das Probenmaterial der Maske gezogen. Die BFE wird durch die Anzahl der koloniebildenden Einheiten angegeben, die durch das Material der Maske hindurchgehen. Der Probekörper wird in einer Mindestgröße von 100 mm x 100 mm aus einer fabrikneuen Maske ausgeschnitten.

Derartige Prüfungen außerhalb von Laboratorien mit infektiösen oder potentiell infektiösen humanen Pathogenen, insbesondere Viren und Viruspartikel, wie sie im Labor bzw. in Tierstudien durchgeführt werden, sind auf Grund der potenziellen Gefährdung nicht möglich. Untersuchungen in situ mit den Bedingungen der Raumströmung und eventueller Belüftungstechnik sind notwendig, um Übertragungswege und Ausbreitung unter tatsächlichen Voraussetzungen messen zu können.

Im Stand der Technik sind ein häufiges und bisher nicht gelöstes Problem die in der Luftströmung natürlicherweise vorkommenden Partikel, z.B. Schweb- und Staubpartikel, bei der Bestimmung der Ausbreitung von Aerosolen. Diese können die Messvorrichtungen stören und folglich Messungen unter Verwendung dieser Vorrichtung außerhalb von Laboratorien unmöglich machen. Nachteilig im Stand der Technik weiterhin ist der Bedarf an Probanden und die Nutzung von Mikroorganismen, um die Wirkung von Schutzmasken zu testen. Ein weiteres bisher nicht gelöstes Problem besteht in der Aufklärung der Ausbreitung und Übertragung von Pathogenen, wie z.B. Viren, von einem infizierten Menschen in situ, die insbesondere reale Bedingungen, wie z.B. Abstand, Luftströmungsverhältnisse, Schutzausrüstungen und Belüftungsanlagen, berücksichtigt.

Das durch die Erfindung gelöste Problem besteht somit darin, eine sensitive, von anderen in Luftströmen vorhandenen Partikeln unabhängige Vorrichtung und ein Verfahren zu entwickeln, welches reproduzierbar eine definierte Ausbreitung von Aerosolen und den Empfang von Aerosolen simulieren und messen lässt.

Ein Verfahren zur vollumfänglichen Beurteilung der Ausbreitung von potentiell infektiösen Aerosolen eines Menschen in geschlossenen Räumen inklusive der Aufnahme durch einen anderen Menschen ist nicht bekannt. Es besteht ein hoher Bedarf in der Bevölkerung, dem Gesundheits- und Schulwesen sowie ein hohes wirtschaftliches Interesse, das Infektionsrisiko, Hygiene- und Abstandsregelungen sowie zu treffende Maßnahmen im Falle einer Pandemie nach den tatsächlich vorhandenen Bedingungen einzuschätzen.

Die vorliegende Erfindung stellt eine einfache, variabel einsetzbare und kostengünstige Vorrichtung bereit, die die Probleme im Stand der Technik in einem Verfahren löst.

### ZUSAMMENFASSUNG DER ERFINDUNG

In Anbetracht des Standes der Technik bestand die Lösung des Problems, das der Erfindung zugrunde lag, in der Bereitstellung einer einfachen Vorrichtung und eines einfachen Verfahrens, eine Ausbreitung und Übertragung von Viren in Aerosolen in situ zu simulieren und durch konduktometrische Messungen zu quantifizieren und ist bisher nicht bekannt. Die simulierten Viren sind bevorzugt Viren für Infektionskrankheiten, insbesondere Viren für Atemwegserkrankungen, wie z.B. SARS-CoV-2. Eine weitere Aufgabe der Erfindung war es, eine Vorrichtung und ein Verfahren bereitzustellen, welches kontinuierlich und reproduzierbar Messdaten erzeugt und von der Umgebung und anderen Partikeln, als die zu messenden Partikel, unabhängig ist.

Dieses Problem wird durch die Merkmale der unabhängigen Ansprüche gelöst. Bevorzugte Ausführungsformen der vorliegenden Erfindung werden durch die abhängigen Ansprüche bereitgestellt.

Die vorliegende Erfindung bezieht sich daher in einem Aspekt auf eine Vorrichtung zur konduktometrischen Messung einer in situ simulierten Virusausbreitung in Aerosolen, wobei die genannte Vorrichtung:
a. einen Aerosol-Generator (1) mit einer Zweistoff-Düse (2) zur Erzeugung von Luftströmen mit leitfähigen Aerosol-Partikeln (3),
b. eine Luftstrom-Aufnahme-Komponente (7),
c. eine Ansaugeinheit (8) mit einer Vakuumpumpe (18) zur Erzeugung eines Saugdrucks in der Luftstrom-Aufnahme-Komponente (7),
d. eine Aerosol-Partikelfalle (9) mit einem Behältnis (19) für eine Flüssigkeit verbunden mit der Luftstrom-Aufnahme-Komponente (7) und
e. eine Leitfähigkeit-Messeinheit (10) mit einer Pumpe (23) und einer Leitfähigkeit-Messsonde (24) für die Bestimmung der Leitfähigkeit, wobei die Leitfähigkeit-Messeinheit (10) mit der Aerosol-Partikelfalle (9) verbunden ist,
umfasst.

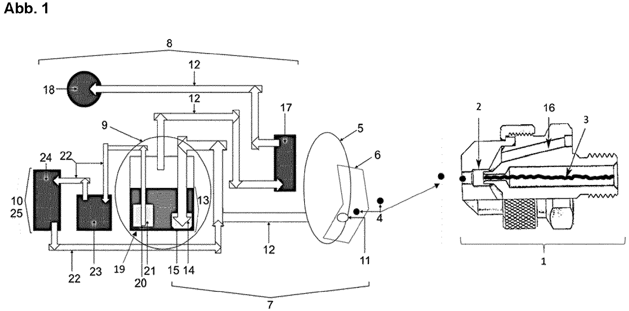

Ein Vorteil der Erfindung gegenüber dem Stand der Technik liegt in der Beurteilung der Ausbreitung und Übertragung von potentiell virenhaltigen Aerosolen insbesondere außerhalb von Laboratorien, bevorzugt, aber nicht ausschließlich, in geschlossenen oder offenen Räumen. Aerosole sind erfindungsgemäß auch Tröpfchen. Als "in situ" und "reale Bedingung" kann jeder Ort, insbesondere außerhalb von Laboratorien, verstanden werden. Es ist bekannt, dass Viren und Virenbestandteile auf Grund einer potenziellen Gefährdung nicht zu Analysezwecken außerhalb von Laboratorien verwendet werden dürfen. Ein vorteilhafter Aspekt der Erfindung ist die Verwendung von bevorzugt leitfähigen Aerosol-Partikel zur Simulation von Viren. In der vorliegenden Erfindung werden insbesondere die leitfähige Aerosol-Partikel enthaltenden Aerosole in Luftströmen durch eine Vorrichtung ausgestoßen, wobei diese Vorrichtung ein Aerosol-Generator sein kann.
Die vorliegende Erfindung stellt eine kombinierte Vorrichtung mit mindestens einem Aerosol-Generator und einem oder mehreren Absorbern von Aerosolen dar, die auch in unterschiedlichen räumlichen Anordnungen zueinander positioniert werden können. Der Absorber ist auch ein Teil der Vorrichtung zum Aufnehmen von bevorzugt leitfähigen Aerosol-Partikeln in Luftströmen und konduktometrischen Messen der leitfähigen Aerosol-Partikel. Eine Schematische Darstellung einer ersten bevorzugten Ausführungsform der Vorrichtung, die einen Absorber und einen Aerosol-Generator umfasst, ist in Abbildung 1 gezeigt und in Beispiel 1 beschrieben, ohne auf diese beschränkt zu sein. Überraschenderweise ließen sich durch die Kombination der Vorrichtung die leitfähigen Aerosol-Partikel in Luftströmen einfach und korrekt quantifizieren.

Die Vorrichtung ist bevorzugt portabel. Ein Aerosol-Generator oder ein Absorber ist portabel in dem Sinne, dass sie beispielsweise ohne technische oder mechanische Unterstützung ortsveränderlich sind.
Der Aerosol-Generator kann bevorzugt in Kombination mit dem Absorber insbesondere zur Messung der Ausbreitung und Übertragung von potentiell infektiösen Aerosolen verwendet werden. Ein vorteilhafter Aspekt der Erfindung liegt in der genauen Bewertung von Infektionsrisiken.

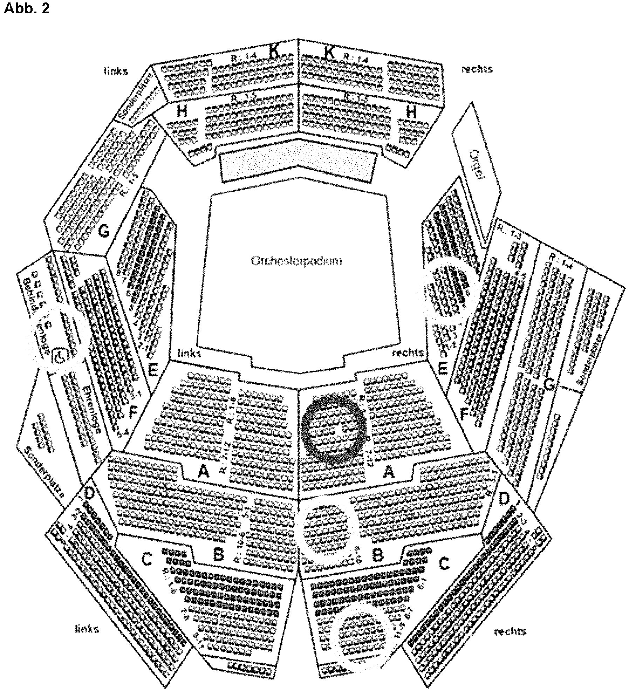

Messungen in einem Konzertsaal unter Verwendung der Vorrichtung dienen als ein mögliches Ausführungsbeispiel (Abb. 2-6, Beispiel 2), ohne auf diese beschränkt zu sein. Der durchschnittliche Fachmann kennt ein Konzertsaal als Teil eines Gebäudes mit mindestens einem Besucherblock, der Sitzplätze aufweist. Im Konzertsaal wurden in fünf Besucherblöcken (Abb. 2, markiert mit Kreisen) die Ausbreitung und Übertragung von Aerosolen in Abhängigkeit einer Belüftung (Abb. 5a und 5b), der Verwendung von Schutzmasken (Abb. 6) und Sitzplatzabständen (Abb. 3a und 3b) untersucht. Beispielhaft werden die Ausführung und Ergebnisse von Besucherblock A (Abb. 2, markiert mit einem schwarzen Kreis) in den Abbildungen 3a-6 und Beispiel 2 beschrieben und zeigen die Funktionalität der Vorrichtung und des Verfahrens im Sinne der Erfindung. Die Messungen im Konzertsaal lieferten überraschend exakte Ergebnisse über die Ausbreitung von Aerosolen in Abhängigkeit der verwendeten Schutzausrüstung und der Belüftungsstufen. Insbesondere zeigte die Kombination der Vorrichtung mit Schaufensterpuppen ein realistisches Ausbreitungs- und Übertragungsmuster unter verschiedenen Abständen des Aerosol-Generators zu den Absorbern. Ein besonderer Vorteil der Erfindung ist, dass die Vorrichtung der Erfindung auch unter anderem in Veranstaltungsräumen, Universitäten, Kliniken, Kinos, Konferenzräumen, Museen, Bibliotheken, Schulen, Universitäten, Sporthallen und Laboratorien verwendet werden kann.

Ein weiterer vorteilhafter Aspekt der Erfindung liegt auch in der konduktometrischen Messung der leitfähigen Aerosol-Partikel, wobei die Messung kontinuierlich oder periodisch, bevorzugt kontinuierlich, erfolgen kann. Vorteilhaft ist weiterhin, dass die leitfähigen Aerosol-Partikel direkt gemessen werden können durch eine Leitfähigkeit-Messeinheit. Bevorzugt sind die leitfähigen Aerosol-Partikel quantifizierbar unter Verwendung einer Leitfähigkeit-Messeinheit. Die Leitfähigkeit-Messung kann von einer Leitfähigkeit-Messsonde erfasst werden. Durch ein Analyse-Gerät werden auch die Messergebnisse für den Anwender in Form von digitalen Daten ausgegeben. Ein weiterer vorteilhafter Aspekt der Erfindung liegt in der Empfindlichkeit und Reproduzierbarkeit der Vorrichtung und des Verfahrens. Erfindungsgemäß stellt die Leitfähigkeit-Messung eine genaue Bestimmung der Konzentrationen leitfähiger Aerosol-Partikel insbesondere in der Größenordnung von ppm (parts per million) bereit.

Ein Vorteil der Erfindung gegenüber dem Stand der Technik ist die Simulation einer Vireninfizieren Person durch den Aerosol-Generator. Der Aerosol-Generator, kann insbesondere Aerosole aus einer Feststoff-Lösung einmalig, periodisch oder kontinuierlich ausstoßen, bevorzugt periodisch oder kontinuierlich. Die erzeugten Aerosole können mit einem Salz, bevorzugt NaCl, als Marker für die Virenlast ergänzt werden. Der Aerosol-Generator kann die Aerosole durch eine handelsübliche Druckluftdüse, bevorzugt eine druckluftunterstützte Zweistoff-Düse, besonders bevorzugt eine intern mischende druckluftunterstützte Zweistoff-Düse, erzeugen. Der durchschnittliche Fachmann weiß, dass der Ausstoß der Aerosole durch eine druckluftunterstützte Zweistoff-Düse konstant, reproduzierbar und in Frequenz, Länge und Aerosol-Menge variiert werden kann. Ein weiterer Vorteil der Erfindung ist, dass Düsengeometrie und Massenströme eine Aerosolgrößenverteilung und einen Austrittsimpuls bereitstellen, die insbesondere ähnlich dem Ausstoß von Aerosolen beim Atmen, Husten, Niesen von Menschen sein können. Nachteilig bei den aus dem Stand der Technik bekannten Vorrichtungen ist, dass die Ergebnisse von Probanden abhängen. Probandenabhängig erzeugte Ergebnisse mangeln an Reproduzierbarkeit durch die natürliche Variation von Atmung, Sprechen, Husten und Niesen.
Es ist überraschend, dass diese Lösung das Husten, Niesen, Sprechen und Atmen eines Menschen verlässlich nachbilden kann. In einer Ausführungsform kann ein einmaliger Ausstoß einer größeren Aerosolmenge einem Husten oder Niesen entsprechen. In einer weiteren Ausführungsform kann ein periodischer Ausstoß kleinerer Aerosol-Mengen einem normalen Atemvorgang entsprechen. Ein Ausführungsbeispiel beschreibt den Ausstoß als Husten (Abb. 3b-6). Das Aerosol breitet sich, überwiegend angetrieben von der Luftströmung, aus. Überraschenderweise konnten die sich so ausbreitenden Aerosole mit und ohne Belüftungsanlage sensitiv durch den Absorber aufgenommen und detektiert werden. Insbesondere wurde die Verwendung von Schutzmasken und/oder einem Prallblech durch unterschiedliche Messergebnisse korrekt nachgewiesen. Je nach Ausführungsform können sich die Aerosol-Partikel in fester Phase oder die Aerosol-Partikel in flüssiger Phase, den Aerosolen, ausbreiten. Je nach Ausführung können sich die Aerosol-Partikel in der flüssigen und/oder in der festen Phase befinden, z.B. ein Aerosol-Partikel mit festem Kern und flüssiger Oberfläche.

Die vorliegende Erfindung stellt somit eine Vorrichtung und ein Verfahren zur Untersuchung der Ausbreitungswege und Übertragung potenziell infektiöser Aerosole und Tröpfchen bereit. Das Verfahren der vorliegenden Erfindung kann hierbei Kernfragen zur Infektion über Aerosole von zwei unabhängig zu betrachtenden Aufgaben beantworten. In einer ersten Aufgabe können Übertragungswege und -risiken in geschlossenen Räumen wie beispielsweise in Klassenräumen, Zugwaggons oder Flugzeugen, sowie die Auswirkungen unterschiedlicher Maßnahmen zur Eindämmung oder Herabsenken der Virenlast (Filtermaterialien in Klimaanlagen, Strömungs-/ Tröpfchenbarrieren, regelmäßiges Lüften usw.) beurteilt werden. In einer zweiten Aufgabe kann das Verfahren genutzt werden, um die Wirksamkeit des Tragens von Schutzmasken zu untersuchen. Hierbei können sowohl die Filtereigenschaften des verwendeten Maskenmaterials als auch Einflussfaktoren wie ein korrekter Sitz der Gesichtsmaske quantifiziert werden.

In einer Ausführungsform der Erfindung enthalten die leitfähigen Aerosol-Partikel (4) mindestens einen Ladungsträger, bevorzugt sind es Salze oder äquivalente Verbindungen, noch bevorzugter NaCl. Salze oder äquivalente Verbindungen im Sinne der Erfindung können Verbindungen mit Kalium, Calcium, Magnesium als Kationen und Chlorid, lodid, Sulfat, Nitrat, Acetat, Citrat als Anion sein. Weitere vorteilhafte Salze sind Salze der Aminosäuren mit geladener Seitenkette. In den Ausführungsbeispielen wird die Verwendung von NaCI als Salz bevorzugt. Erfindungsgemäß stellt NaCl einen bevorzugten Marker für Viren dar. Durch NaCl kann insbesondere simuliert werden, welche Menge an potenziell infektiösen Aerosolen von einem mit Viren infizierten Menschen in die Atemwege eines anderen Menschen über den Luftstrom gelangen könnte. Nachteilig im Stand der Technik, wie beschrieben in der DIN-EN-Norm 149, ist die Untersuchung der Schutzwirkung von Schutzmasken durch einen Probanden. Der durchschnittliche Fachmann weiß, dass ein Proband ein Mensch ist. Die bestehenden Methoden im Stand der Technik untersuchen lediglich die Filterwirkung des Materials einer Schutzmaske. Die Untersuchung nach DIN-EN-Norm 149 betrachtet die Veränderungen durch das Tragen der Schutzmaske. Variationen in Husten, Atmung, Sprechen und Niesen sind beim Probanden nicht reproduzierbar. Die vorliegende Erfindung kann als weiteren vorteilhaften Aspekt durch Puppen den Einfluss der Gesichtsgeometrie auf die Ausbreitung von Aerosolen beim Ausatmen und Einatmen simulieren. Ein besonderer Vorteil gegenüber dem Stand der Technik ist, dass die Vorrichtung und das Verfahren reproduzierbare und quantitative Leitfähigkeit-Messergebnisse erzielen. Der durchschnittliche Fachmann konnte nicht erwarten, dass die Leitfähigkeit-Messergebnisse der Vorrichtung quantitativ und reproduzierbar einen Rückschluss auf die Ausbreitung potenzieller Viren bereitstellen. Beispielhaft zeigt ein Vergleich verschiedener Sitzplatzabstände in einem Besucherblock des Konzertsaales, dass die Gesamtmenge des aufgenommenen Aerosols in Abhängigkeit zum Sitzplatzabstand quantifizierbar ist und bei Verringerung des Sitzplatzabstandes zunimmt (Abb. 4).

Vorteil dieser Erfindung gegenüber dem Stand der Technik ist der schädigungsfreie und Probanden-lose Einsatz von bevorzugt NaCl für die umgebenen Sachen, technische Anlagen und Lebewesen außerhalb von Laboratorien. Im Gegensatz zum Stand der Technik, wie z.B. Partikelzählgeräte, ist insbesondere die konduktometrische Salz-, bevorzugt NaCl-, Messung unabhängig von anderen sich im Luftstrom befindlichen Partikeln. Die Vorrichtung im Sinne der Erfindung kann bevorzugt unabhängig von Laboratorien oder Reinräumen verwendet werden.

In einer weiteren Ausführungsform der Erfindung stößt der Aerosol-Generator (1) einen Luftstrom (16), ergänzt um leitfähige Aerosol-Partikel (4) aus einer wässrigen Feststoff-Lösung (3), aus. Im Sinne der Erfindung kann der mit Aerosol-Partikeln angereicherte Luftstrom mindestens einmal und/oder periodisch in einstellbaren Zeitintervallen vom Aerosol-Generator ausgestoßen werden. Ein vorteilhafter Aspekt der Erfindung ist, dass die Anreicherung der Aerosol-Partikel in Aerosolen in Größe, Anzahl und Ladungsträgerkonzentration in der Feststoff-Lösung auch variiert werden kann. Die Ladungsträgerkonzentration ist bevorzugt 0,1% - 27%, besonders bevorzugt 0,9% - 15%, ganz besonders bevorzugt 0,9% - 10%. Erfindungsgemäß simuliert der Aerosol-Generator den Ausstoß potenziell virus-belasteter Aerosole eines Menschen. In einer Ausführungsform simuliert der Aerosol-Generator Husten, Niesen, Sprechen, Atmen, bevorzugt Husten, wobei die ausgestoßene Aerosolmenge pro Huster bevorzugt 0,001 g - 7 g, besonders bevorzugt 0,001 g - 1 g, ganz besonders bevorzugt 0,01 g - 1 g sein kann. Das Ausführungsbeispiel verwendet Husten (Abb. 4-6). Ein wesentlicher und vorteilhafter Aspekt der Erfindung gegenüber dem Stand der Technik ist die variable und reproduzierbare Einstellung der Massenströme und der Frequenz für Husten, Niesen, Atmen und Sprechen. Die Frequenz für Husten kann zwischen bevorzugt 0,001 - 1 Hz liegen, besonders bevorzugt 0,1 - 1 Hz und die Länge des Husters zwischen bevorzugt 0,001 - 1 Min liegen kann, besonders bevorzugt 0,01 - 20 s, ganz besonders bevorzugt 0,5 - 5 s. Der Ausstoß kann auch kontinuierlich erfolgen. In einer Ausführungsform der Erfindung ist der Aerosol-Generator mit einem Schaufensterpuppenmodell verbunden (Abb. 3a rechts), bevorzugt mit der Mundöffnung und/oder Nasenöffnung des Schaufensterpuppenmodells. Die Aerosole können über die Mundöffnung und/oder Nasenöffnung des Schaufensterpuppenmodells ausgestoßen werden. Der Aerosol-Generator konnte überraschend genau das menschliche Husten und das Husten in die Armbeuge nachahmen. Insbesondere konnten die Unterschiede quantitativ nachgewiesen werden.

In weiteren Ausführungsformen wird der mit der Mundöffnung und/oder Nasenöffnung verbundene Aerosol-Generator vollständig oder teilweise bedeckt mit der Hand des Schaufensterpuppenmodells und/oder einer Schutzausrüstung (Abb. 3a rechts). Eine Ausbreitung der Aerosole konnte auch in Verbindung mit dem Schaufensterpuppenmodell und der Schutzausrüstung besonders exakt und kostengünstig gezeigt werden.

In einer weiteren Ausführungsform ist der Absorber mit einem Schaufensterpuppenmodell verbunden (Abb. 3a rechts), bevorzugt mit der Mundöffnung und/oder Nasenöffnung des Schaufensterpuppenmodells, wobei die Aerosole über die Mund- und/oder Nasenöffnung am Kopf des Schaufensterpuppenmodells einströmen können.

In weiteren Ausführungsformen wird der mit der Mund- und/oder Nasenöffnung verbundene Absorber vollständig oder teilweise bedeckt mit der Hand des Schaufensterpuppenmodells und/oder einer Schutzausrüstung (Abb. 3a rechts). Die Aufnahme der Aerosole am Absorber konnte auch mit einer Schutzmaske überraschend verlässlich detektiert werden.

In einigen Ausführungsformen der Erfindung, weisen die leitfähigen Aerosol-Partikel (4) eine Größe von bevorzugt 0,01 µm bis 500 µm, besonders bevorzugt 0,1 µm bis 100 µm, ganz besonders bevorzugt 0,1 µm bis 50 µm auf. Ein vorteilhafter Aspekt der Erfindung ist die Messung der Aerosol-Partikel unabhängig von ihrer Größe. In dem Größenbereich von 100 µm bis 500 µm lassen sich besonders gut leitfähige Aerosol-Partikel in großen Tropfen detektieren, die auch beim Niesen entstehen können. Der Größenbereich schon 50 µm bis 100 µm schließt insbesondere Tröpfchen ein, die auch beim Husten und gelegentlich beim Sprechen auftreten. Leitfähige Aerosol-Partikel in Aerosolen und/oder Tröpfchenkernen wie sie auch beim Sprechen und Atmen entstehen können, werden besonders bevorzugt im Größenbereich von 0,01 µm bis 50 µm gemessen. Der Stand der Technik stellt Vorrichtungen bereit, die einen eingeschränkten oder nicht variierbaren Detektionsbereich von Partikelgrößen aufweisen. Vorteilhaft gegenüber dem Stand der Technik ist die variierbare Größe der Aerosol-Partikel und größen-unabhängige Messung der Aerosol-Partikel, um die Simulation insbesondere von Viren und Virusbestandteilen in der Luftströmung zu ermöglichen. Der durchschnittliche Fachmann hätte nicht erwartet, dass unter Verwendung von Aerosol-Partikeln die Ausbreitung und Übertragung von Viren und/oder Virusbestandteilen simuliert werden kann. Aerosol-Partikel in Aerosolen können vom Aerosol-Generator ausgestoßen und durch die Luftströmung zum Absorber transportiert werden. Die Aerosol-Partikel bleiben, ähnlich wie Viren, auch als Schwebkörper in der Luft und breiten sich über die Luftströmung aus. Eine Partikelzählvorrichtung aus dem Stand der Technik könnte dies nicht messen. Ein weiterer vorteilhafter Aspekt der Erfindung liegt in der Verwendung der leitfähigen Aerosol-Partikel, bevorzugt NaCl, die nicht verdunsten und sich, ähnlich wie Viren, im Luftstrom in einer Kristallstruktur im gleichen Größenverhältnis wie Viren ausbreiten.

In einer weiteren Ausführungsform der Erfindung, umfasst die Luftstrom-Aufnahme-Komponente (7) einen Maskenkörper (5) mit mindestens einer Einströmöffnung (11), eine Partikelabscheidevorrichtung (13) und mindestens einen Aerosol-Partikel-Kanal (12). Der Maskenkörper der Luftstrom-Aufnahme-Komponente weist mindestens eine Einströmöffnung auf, durch die bevorzugt die Aerosol-Partikel in Luftströmen in den Teil der Vorrichtung einströmen, der auch der Absorber ist. Der Aerosol-Partikel-Kanal bildet bevorzugt an einem ersten Ende die Einströmöffnung am Maskenkörper aus. Die Partikelabscheidevorrichtung weist mindestens eine Ausströmöffnung auf, welche bevorzugt das zweite Ende des Aerosol-Partikel-Kanals ausbildet. Innerhalb des Aerosol-Partikel-Kanals herrscht auch ein vollständiger oder im Wesentlichen vollständiger Unterdruck vor. Der Unterdruck kann bevorzugt durch eine Vakuumpumpe erzeugt werden. Dies führt auch dazu, dass die Aerosol-Partikel in Luftströmen durch die Einströmöffnung in den Absorber gesaugt und zur Partikelabscheidevorrichtung gezogen werden.

In einer weiteren Ausführungsform der Erfindung, kann der Maskenkörper (5) mit der Einströmöffnung (11) vollständig oder teilweise von einer Schutzausrüstung (6) bedeckt sein. Der Maskenkörper stellt bevorzugt die Nachahmung eines Probandenkopfes dar. Die Messungen durch den Absorber können mit oder ohne Schutzausrüstung durchgeführt werden. Die Schutzausrüstung kann teilweise oder vollständig den Maskenkörper bedecken, wobei mindestens eine Einströmöffnung am Maskenkörper verhüllt wird. In einer weiteren Ausführungsform der Erfindung, kann der Aerosol-Generator (1) mit der Ausströmöffnung der Zweistoff-Düse (2) vollständig oder teilweise von einer Schutzausrüstung bedeckt sein. Der Fachmann kennt eine Vielzahl von Schutzausrüstungen. Eine Schutzausrüstung kann bevorzugt eine Gesichtsmaske oder Stoffmaske sein, besonders bevorzugt eine Gesichtsmaske genormt oder analog genormt nach EN 136, EN 140 oder EN 149 sein, ganz besonders bevorzugt eine chirurgische Gesichtsmaske. Eine Schutzrüstung im Sinne der Erfindung ist insbesondere das, was im Handbuch zum Bevölkerungsschutz aufgeführt ist (Kapitel 6.4 Persönliche Schutzausrüstung, Biologische Gefahren I, Handbuch zum Bevölkerungsschutz, 3. Auflage, Sonderpublikation) Die Schutzausrüstung kann den Einstrom der Aerosol-Partikel in Luftströmen in den Absorber und/oder den Ausstrom der Aerosol-Partikel in Luftströmen aus dem Aerosol-Generator verhindern. Der Fachmann konnte nicht erwarten, dass eine Leitfähigkeit-Messung auch mit einer Schutzausrüstung möglich ist und korrekte Messergebnisse liefert. Dies zeigen die Ausführungsbeispiele (Abb. 3a,b und 5-6). In Abbildung 6 zeigt ein Ausführungsbeispiel auch Ergebnisse einer besonders akkuraten Leitfähigkeit-Messung unter Verwendung verschiedener Schutzausrüstungen, die die Einströmöffnung am Maskenkörper und/oder die Ausströmöffnung am Aerosol-Generator bedecken.

In weiteren Ausführungsformen der Erfindung, umfasst die Ansaugeinheit (8) einen Volumenstromregler (17) und mindestens einen Aerosol-Partikel-Kanal (12) verbunden mit der Aerosol-Partikelfalle (9), wobei der Volumenstromregler (17) einen Volumenstrom zwischen 0,001 - 100 l/min, bevorzugt 0,001 - 30 l/min, noch bevorzugter 12-18 l/min erzeugt. Ein erster Aerosol-Partikel-Kanal ist am ersten Ende bevorzugt mit der Vakuumpumpe und am zweiten Ende bevorzugt mit einem ersten Anschluss am Volumenstromregler verbunden. Die Vakuumpumpe erzeugt auch im abgeschlossenen oder im Wesentlichen abgeschlossenen Behältnis der Aerosol-Partikelfalle einen vollständigen oder im Wesentlichen vollständigen Unterdruck, der auch einen Saugdruck in der Luftstrom-Aufnahme-Komponente erzeugt. Ein zweiter Aerosol-Partikel-Kanal ist am ersten Ende bevorzugt mit einem zweiten Anschluss am Volumenstromregler verbunden und bildet am zweiten Ende bevorzugt eine Öffnung innerhalb des Behältnisses der Aerosol-Partikelfalle aus. Die Öffnung weist bevorzugt keinen Kontakt zur Flüssigkeit im Behältnis auf Für das besonders verlustarme Ansaugen der Aerosol-Partikel in den Aerosol-Partikelkanal und die Aerosol-Partikelfalle haben sich insbesondere ein vollständiger Unterdruck und ein bevorzugter Volumenstrom von 12-18 l/min als besonders vorteilhaft erwiesen.

In einer weiteren Ausführungsform der Erfindung, bildet der Aerosol-Partikel-Kanal (12) am ersten Ende eine Einströmöffnung (11) aus und steht am zweiten Ende mit der Partikelabscheidevorrichtung (13) in Verbindung, wobei die Partikelabscheidevorrichtung (13) eine Ausströmöffnung (14) und einen Partikelabscheider (15) umfasst. In einer weiteren Ausführungsform der Erfindung, besteht auch ein direkter räumlicher Kontakt zwischen der Partikelabscheidevorrichtung (13) und der Aerosol-Partikelfalle (9), wobei dieser räumliche Kontakt auch ein vollständiger direkter Kontakt der Partikelabscheidevorrichtung (13) mit der Flüssigkeit enthalten im Behältnis (19) darstellt. Dieser direkte räumliche Kontakt wird bevorzugt dadurch gebildet, dass der Partikelabscheider die Ausströmöffnung vollständig oder im Wesentlichen vollständig umhüllt, wobei der Partikelabscheider und die Ausströmöffnung vollständig von der wässrigen Flüssigkeit benetzt werden. Es ist bevorzugt, dass der Partikelabscheider vollständig von Wasser umgeben wird. Der direkte räumliche Kontakt der Partikelabscheidevorrichtung mit der Flüssigkeit hat sich als besonders vorteilhaft für das bevorzugt vollständige Abscheiden der Aerosol-Partikel in die Flüssigkeit erwiesen. Es ist insbesondere bevorzugt, dass der aus der Ausströmöffnung strömende Luftstrom den Partikelabscheider passiert, wodurch der Luftstrom in feine Blasen zerteilt werden kann. Das Zerteilen des Luftstromes in feine Blasen zeigt sich insbesondere vorteilhaft für das bevorzugt vollständige Lösen der Aerosol-Partikel aus dem Luftstrom in der Flüssigkeit. In einer bevorzugten Ausführungsform der Erfindung kann der Partikelabscheider durchlässig für Gase und/oder wässrige Flüssigkeiten sein und bewirkt das Abtrennen von Feststoffen, beispielsweise der Aerosol-Partikel, aus dem Luftstrom. Dadurch wird das Lösen der Aerosol-Partikel aus dem Luftstrom in der wässrigen Flüssigkeit im Behältnis der Aerosol-Partikel-Falle ermöglicht. Durch das Lösen der Aerosol-Partikel in der wässrigen Flüssigkeit kann sich die elektrische Leitfähigkeit der wässrigen Flüssigkeit verändern, bevorzugt erhöhen.

In einer weiteren Ausführungsform der Erfindung ist die Flüssigkeit im Behältnis (19) auch eine wässrige Flüssigkeit ist. Vorteilhaft wird im Sinne der Erfindung destilliertes oder de-ionisiertes Wasser verwendet werden, besonders bevorzugt de-ionisiertes Wasser. Der Fachmann weiß, dass destilliertes Wasser eine Leitfähigkeit von <20 µS/cm und de-ionisiertes Wasser eine Leitfähigkeit <5 µS/cm hat. Ein Behältnis kann unter anderem aus Glas, z.B. Borosilikat-Glas, oder aus Kunststoff, z.B. Polymethylmethacrylat, bestehen. Die Verwendung von de-ionisiertem Wasser hat sich für die exakte Messung der Leitfähigkeit als besonders vorteilhaft erwiesen.

In einer weiteren Ausführungsform der Erfindung, umfasst die Leitfähigkeit-Messeinheit auch einen Einströmarm (20), einen Ansaugschutz (21), mindestens einen Flüssigkeitskanal (22), eine Pumpe (23), einen Leitfähigkeit-Messsensor (24) und eine Analyseeinheit (25). Die Leitfähigkeit-Messeinheit zeichnet sich durch eine besonders einfache Anwendbarkeit und präzise Ergebnisse aus. Insbesondere sind Bestandteile der Leitfähigkeit-Messeinheit sehr kostengünstig im Handel erhältlich.

Im Gegensatz zu einem Partikelzählgerät aus dem Stand der Technik ermöglicht die vorliegende Erfindung den direkten Nachweis die leitfähigen Aerosol-Partikel in Art und Konzentration durch eine Leitfähigkeit-Messung. Der Leitfähigkeit-Messsensor bestimmt den zeitlichen Verlauf der Leitfähigkeit der wässrigen Flüssigkeit. Die Messwerte lassen einen direkten Rückschluss auf die Aerosol-Partikel-Konzentration zu, die im Absorber einströmt. Die Ergebnisse lassen überraschenderweise auch einen Rückschluss auf potenziell übertragene Viren zu.
Die Erfindung stellt in Abgrenzung zum Stand der Technik insbesondere eine Vorrichtung und ein Verfahren bereit, welche die Messung nur der vom Aerosol-Generator ausgestoßenen und mit den Aerosol-Partikeln ergänzten Aerosole über die Leitfähigkeit ermöglicht. Das Verfahren zeigte überraschend auch in Anwesenheit anderer Partikel in den Luftströmen besonders exakte Messungen der Aerosol-Partikel. Ein wesentlicher Vorteil der Erfindung ist, dass das Verfahren eine Verwendung unter anderem in Veranstaltungsräumen, Universitäten, Kliniken, Kinos, Konferenzräumen, Museen, Bibliotheken, Schulen, Universitäten, Sporthallen und Laboratorien erlaubt.

Die in Abbildung 5a und 5b gezeigten Messwerte stellen ein Ausführungsbeispiel für einen Vergleich der Ausbreitung der Aerosole bei laufender oder abgeschalteter Belüftungsanlage im Konzertsaal dar. Die Ausbreitung und Übertragung der leitfähigen Aerosol-Partikel im Konzertsaal wurde unabhängig von anderen im Luftstrom vorhandenen Partikeln korrekt durch die Vorrichtung gemessen, unabhängig von einer Belüftungsanlage. Der durchschnittliche Fachmann weiß, was ein Konzertsaal ist und dass in der Luft eines Konzertsaales andere Partikel als die Aerosol-Partikel vorhanden und normalerweise keine Aerosol-Partikel, wie in der Erfindung bevorzugt, zu erwarten sind. Die Leitfähigkeit-Messung der Aerosol-Partikel hat sich überraschend präzise und störungsarm bei der Differenzierung zwischen den verschiedenen Belüftungsstufen in einem Konzertsaal und in einem Konferenzraum erwiesen.

In einigen Ausführungsformen können Größe und Menge der zu messenden leitfähigen Aerosol-Partikel frei gewählt werden und kann auch ein Gemisch verschiedener Aerosol-Partikel-Größen sein. Es hat sich als vorteilhaft für die korrekte Simulation der Viren herausgestellt, dass die Größe und Menge der zu messenden leitfähigen Aerosol-Partikel variiert werden kann.

In einer weiteren Ausführungsform der Erfindung, bildet der Flüssigkeitskanal (22) an einem ersten Ende einen Einströmarm (20) aus und steht an einem zweiten Ende mit dem Leitfähigkeit-Messsensor (24) in direktem Kontakt. In einer weiteren Ausführungsform der Erfindung, dadurch gekennzeichnet, dass ein direkter räumlicher Kontakt zwischen dem Einströmarm (20) und der Aerosol-Partikelfalle (9) besteht, wobei dieser räumliche Kontakt ein vollständiger direkter Kontakt des Einströmarmes (20) mit der Flüssigkeit enthalten im Behältnis (19) darstellt. Der direkte Kontakt des Einströmarmes mit der wässrigen der Flüssigkeit bewirkt unter Verwendung einer Pumpe, bevorzugt eine Peristaltikpumpe, den gerichteten Transport durch den Flüssigkeitskanal zur Leitfähigkeit- Messeinheit. Die Verwendung der Pumpe stellt insbesondere einen gleichmäßigen und luftblasenarmen Transport der wässrigen Flüssigkeit zur Leitfähigkeit-Messeinheit bereit. Luftblasen können die Leitfähigkeit-Messung stören. Eine Ausführungsform mit einer Peristaltikpumpe zeichnet sich besonders durch einen Leckagen-freien Flüssigkeitstransport und eine exakte Leitfähigkeit-Messung aus.

In einem weiteren Aspekt bezieht sich die Erfindung auch auf ein Verfahren zur konduktometrischen Messung einer in situ simulierten Virusausbreitung in Aerosolen in einem Absorber der Vorrichtung der vorliegenden Erfindung. Die Erfindung stellt insbesondere ein kostengünstiges und äußerst präzises Verfahren zum Messen der Aerosol-Partikel-Konzentration in Aerosolen bereit, die dauerhaft und reproduzierbar korrekte Messergebnisse in situ liefert. Durch das Verfahren kann erfindungsgemäß auch bestimmt werden, welche Menge an potenziell infektiösen Aerosolen von einem infizierten Menschen in die Lunge eines anderen Menschen transportiert werden können. Das Verfahren kann auch variiert werden, z.B., nicht ausschließlich, durch die Verwendung einer Schutzausrüstung, andere Aerosol-Partikel-Größen oder Änderungen der Ausstoßfrequenz durch den Aerosol-Generator. Das Verfahren wird auch durch die Ausführungsbeispiele im Konzertsaal beschrieben (Abb. 2-6, Beispiel 2). Das Verfahren kann auch in Veranstaltungsräumen, Universitäten, Kliniken, Kinos, Konferenzräumen, Museen, Bibliotheken, Schulen, Universitäten, Sporthallen und Laboratorien verwendet werden. Überraschenderweise kann das Verfahren auch in schwebpartikelreichen Räumen besonders präzise Messergebnisse liefern.

In einer Ausführungsform der Erfindung, werden die leitfähigen Aerosol-Partikel (4) durch den Absorber geleitet. Ein durch die Vakuumpumpe erzeugter Saugdruck bewirkt den Einstrom und die Weiterleitung der Aerosol-Partikel. Je nach Ausführungsform können sich die Aerosol-Partikel auch in fester Phase und/oder in flüssiger Phase befinden. In weiteren Ausführungsformen können sich die Aerosol-Partikel auch teilweise in der flüssigen und teilweise in der festen Phase befinden, z.B. ein Aerosol-Partikel mit festem Kern und flüssiger Oberfläche. Es hat sich als besonders vorteilhaft erwiesen, dass die Aerosol-Partikel nicht verdunsten und in jeder Erscheinungsform ähnlich präzise durch den Absorber aufgenommen und gemessen werden.

In einigen Ausführungsformen der Erfindung, können die leitfähigen Aerosol-Partikel (4) über die Partikelabscheidevorrichtung (13) durch direktem Kontakt mit dem Partikelabscheider (15) in der wässrigen Flüssigkeit gelöst werden. Durch den vollständigen oder im Wesentlichen vollständigen Unterdruck, bevorzugt erzeugt durch eine Vakuumpumpe, werden Aerosole mit Aerosol-Partikel in die Partikelabscheidevorrichtung geleitet. Die Partikelabscheidevorrichtung der bevorzugten Ausführungsform, die auch einen Filter umfasst, zeichnet sich durch eine ausgezeichnete Aufnahme der Aerosol-Partikel in der Flüssigkeit aus.

In einer weiteren Ausführungsform kann die Leitfähigkeit der wässrigen Flüssigkeit einmalig und/oder kontinuierlich gemessen werden. Die Leitfähigkeitsmessung erfolgt bevorzugt kontinuierlich. Nachteilig im Stand der Technik sind Vorrichtungen wie Partikelzählgeräte, die nur parallele, kurzzeitige Messungen ermöglichen (U. S. Patent No. 2656508). Vorteilhaft im Sinne der Erfindung erfasst die Vorrichtung insbesondere den gesamten Luftstrom, der in den Absorber einströmt. Ein weiterer vorteilhafter Aspekt der Erfindung liegt in der Verwendung der leitfähigen Aerosol-Partikel, bevorzugt NaCl, die sich, im Luftstrom auch in einer Kristallstruktur ausbreiten und auch Aerosol-unabhängig besonders präzise messbar sind.

In einem weiteren Aspekt bezieht sich die Erfindung auf eine Verwendung der Vorrichtung zur konduktometrischen Messung einer in situ simulierten Virusausbreitung in Aerosolen, wobei die simulierten Viren bevorzugt Viren für Infektionskrankheiten sind, besonders bevorzugt Corona-Viren, ganz besonders bevorzugt SARS-CoV-2 Viren. In besonderer Abgrenzung zum Stand der Technik kann unter Verwendung der Vorrichtung als eine Ausführungsform eine verlässliche Datenbasis erstellt werden Das Infektionsrisiko für Menschen bei verschiedenen Strömungssituationen in Räumen und unterschiedlichen Positionen von Erkrankten im Raum kann quantifiziert werden.

Weitere Beispiele für die Zusammensetzung der Vorrichtung, Begriffsdefinitionen im Sinne der Erfindung, das Mess-Verfahren und Anwendungsbereiche werden im Folgenden ausführlich beschrieben.

### DETAILIERTE BESCHREIBUNG DER ERFINDUNG

Die vorliegende Erfindung bezieht sich auf eine Vorrichtung und ein Verfahren zur Begriffsdefinitionen in Singular umfassen auch den Plural.

### Absorber

Ein "Absorber", wie hier verwendet, meint insbesondere den Teil der Vorrichtung der vorliegenden Erfindung, der Aufnahme, Weiterleitung, Absorption der Aerosol-Partikel und Leitfähigkeit-Messung der absorbierten Aerosol-Partikel bereitstellt. Der Absorber umfasst nicht den Aerosol-Generator. Der Fachmann weiß, dass Absorption den Prozess der Aufnahme oder des "Lösens" eines Moleküls oder Ions in einem Gas in einer Flüssigkeit beschreibt durch den Kontakt eines Gasstromes mit einem Flüssigkeitsstrom. Der Absorber kann bevorzugt einen Maskenkörper (5), eine Schutzausrüstung (6), eine Luftstrom-Aufnahme-Komponente (7), eine Ansaugeinheit (8), eine Aerosol-Partikelfalle (9), eine Leitfähigkeit- Messeinheit (10), eine Einströmöffnung (11), ein Aerosol-Partikel-Kanal (12), eine Partikelabscheidevorrichtung (13), eine Ausströmöffnung (14), einen Partikelabscheider (15), einen Volumenstromregler (17), eine Vakuumpumpe (18), ein Behältnis (19), ein Einströmarm (20), ein Ansaugschutz (21), ein Flüssigkeitskanal (22), eine Pumpe (23), einen Leitfähigkeit- Messsensor (24), eine Analyse-Einheit (25) umfassen.

### Aerosole

Unter dem Begriff "Aerosol", wie hier verwendet, wird auch ein Tropfen, ein Tröpfchen und ein Tröpfchenkern verstanden. Ein Aerosol ist definitionsgemäß und im Sinne der Erfindung ein heterogenes Gemisch aus festen und/oder flüssigen Anteilen in einem Gas und kann von einem Aerosol-Generator erzeugt werden.

### Aerosol-Partikel, Luftstrom

Unter dem Begriff "Aerosol-Partikel", wie hier verwendet, wird auch ein leitfähiger Aerosol-Partikel, ein fester Anteil, ein in wässriger Flüssigkeit gelöster Feststoff, ein Ion, und eine feste Phase verstanden. Aerosol-Partikel können Salze oder Verbindungen mit mindestens einem Kation und mindestens einem Anion sein, z.B., nicht ausschließlich, NaCl, Propylenglykole, oder künstliches Sputum, bevorzugt NaCl. Der Aerosol-Partikel ist auch der Feststoff-Anteil in einem Aerosol, wobei der Feststoff-Anteil auch in der wässrigen Phase des Aerosols gelöst sein kann. Im Sinne der Erfindung bewegt sich der Aerosol-Partikel in einem Gas gebunden an einen flüssigen Anteil, dem Aerosol, und/oder als Aerosol-Partikel in einer Kristallstruktur fort. Ein Gas kann ein atmosphärisches, lungengängiges, räumliches oder technisches Gas sein. Im Sinne der Erfindung wird das Gas auch als Luft oder Luftstrom verstanden. Der Aerosol-Partikel in einem Aerosol oder der Aerosol-Partikel gelöst in einer wässrigen Flüssigkeit trägt mindestens eine elektrische Ladung und ist leitfähig. Der Durchmesser von Aerosol-Partikeln liegt zwischen bevorzugt 0,01 µm bis 500 µm, besonders bevorzugt 0,1 µm bis 100 µm, ganz besonders bevorzugt 0,1 µm bis 50 µm.

### Salze

Der durchschnittliche Fachmann kennt Salze und weiß, dass Salze chemische Verbindungen sind, die aus positiv geladenen Ionen, den sogenannten Kationen, und negativ geladenen Ionen, den sogenannten Anionen, aufgebaut sind und dass zwischen diesen Ionen ionische Bindungen vorliegen. Kationen im Sinne der Erfindung können unter anderem Natrium, Kalium, Calcium, Magnesium oder Lithium sein, bevorzugt Natrium. Anionen im Sinne der Erfindung können unter anderem Chlorid-, lodid-, Sulfat-, Nitrat-, Acetat-, Succinat- oder Citrat-Ionen sein, bevorzugt Chlorid-Ionen. Bevorzugte Salzverbindungen sind in Tabelle 1 aufgeführt. Salze im Sinne der Erfindung können auch Salze der Aminosäuren mit geladener Seitenkette insbesondere Histidin, Arginin Lysin, Asparaginsäure, Glutaminsäure sein. Als Salze im Sinne der Erfindung können auch Propylenglykole oder künstliches Sputum verstanden werden. Als chemische Verbindung im Sinne der Erfindung wird NaCl besonders bevorzugt. Der durchschnittliche Fachmann kennt NaCl als Speisesalz oder Kochsalz und weiß, dass NaCl gelöst in einer wässrigen Flüssigkeit die Eigenschaft der Leitfähigkeit aufweist und in fester Form eine Kristallstruktur mit einer regelmäßigen Anordnung positiv geladener Natrium-Ionen und negativ geladener Chlorid-Ionen in einem Kristallgitter annimmt. Im Sinne der Erfindung wird unter Aerosol-Partikel auch die Kristallstruktur und Kristalle eines Salzes verstanden. Wie der Fachmann weiß, können die NaCI-Kristalle und somit die Aerosol-Partikel sich durch die Luftströmung fortbewegen.

**Tabelle 1 - Bevorzugte Salzverbindungen**

| | | | | |
|---|---|---|---|---|
| Natrium-Chlorid | Kalium-Chlorid | Calcium-Chlorid | Lithium-Chlorid | Magnesium-Chlorid |
| Natrium-Iodid | Kalium-Iodid | Calcium-Iodid | Lithium-Iodid | Magnesium-Iodid |
| Natrium-Sulfat | Kalium-Sulfat | Calcium-Sulfat | Lithium-Sulfat | Magnesium-Sulfat |
| Natrium-Nitrat | Kalium-Nitrat | Calcium-Nitrat | Lithium-Nitrat | Magnesium-Nitrat |
| Natriu m-Acetat | Kaliu m-Acetat | Calcium-Acetat | Lithium-Acetat | Magnesium-Acetat |
| Natrium-Succinat | Kalium-Succinat | Calcium-Succinat | Lithium-Succinat | Magnesium-Succinat |
| Natrium-Citrat | Kalium-Citrat | Calcium-Citrat | Lithium-Citrat | Magnesium-Citrat |

### Feststoff-Lösung

Eine "Feststoff-Lösung", wie hier verwendet, bedeutet auch Ionen-Lösung und Ladungsträgerlösung und kann ein Gemisch aus einer wässrigen Flüssigkeit und einem in der wässrigen Flüssigkeit gelösten Feststoff sein, wobei die die Konzentration der Feststoff-Lösung bevorzugt 0,1 bis 27 % beträgt, besonders bevorzugt 0,9 bis 15 %, ganz besonders bevorzugt 0,9 bis 10 %.

### Luftströmung

Unter dem Begriff Luftströmung" wird auch Raumströmung und Gasströmung verstanden. Luftströmung ist die Ausbreitung und Bewegung von Gasen in räumlicher und zeitlicher Ausdehnung.

### Ausbreitung

Der Begriff "Ausbreitung" schließt die Diffusion, den Transport und die Konvektion ein. Die Ausbreitung kann insbesondere über Luftströme und Luftströmung stattfinden. Im Sinne der Erfindung ist insbesondere die Ausbreitung von Viren, Pathogenen, Aerosol-Partikeln, Aerosolen, Salzkristallen und/oder Salzen gelöst in Aerosolen gemeint. Es kann mit Ausbreitung die Virenausbreitung, die Aerosol-Partikelausbreitung, die Aerosolausbreitung, die Kristallausbreitung, die Pathogenausbreitung verstanden werden. Unter Diffusion wird der Ausgleich von Konzentrationsunterschieden in Flüssigkeiten oder Gasen aufgrund der Brownschen Molekularbewegung verstanden. Die Konvektion ist der Transport physikalischer Größen in strömenden Gasen oder Flüssigkeiten.

### Wässrige Flüssigkeit, Flüssigkeitskanal, de-ionisiertes Wasser

Eine "wässrige Flüssigkeit", wie hier verwendet, kann auch eine polare Moleküle enthaltende Flüssigkeit sein, bevorzugt de-ionisiertes Wasser, ionenhaltiges Wasser, destilliertes Wasser oder Reinstwasser, besonders bevorzugt de-ionisiertes Wasser. Die wässrige Flüssigkeit wird auch als Flüssigkeit und flüssige Phase verstanden. Der durchschnittliche Fachmann weiß, dass es sich bei Wasser um die chemische Verbindung mit der Summenformel H2O handelt. Der Fachmann kennt *"de-ionisiertes* Wasser" als durch einen Ionenaustauscher erhaltenes Wasser ohne die im normalen Quell- und Leitungswasser vorkommenden Salze, die als Anionen und Kationen gelöst vorkommen. Dem Fachmann ist destilliertes Wasser als durch Destillation, einem Verdampfungsprozess, das von den im normalen Quellwasser oder Leitungswasser vorkommenden Ionen, Spurenelementen und anderen Verunreinigungen befreite Wasser. Ein *"Flüssigkeitskanal"* leitet die wässrige Flüssigkeit erfindungsgemäß in der Vorrichtung. Der Flüssigkeitskanal ist bevorzugt flüssigkeitsundurchlässig und kann ein Rohr, ein Schlauch, oder ein biegsamer Schlauchsein, bevorzugt ein biegsamer Schlauch. Der durchschnittliche Fachmann weiß, was unter dem Kanal, dem Rohr und dem Schlauch, insbesondere dem biegsamen Schlauch zu verstehen ist.

### Aerosol-Generator

Ein "Aerosol-Generator" im Sinne der Erfindung ist insbesondere eine Vorrichtung zum Dispergieren von Flüssigkeiten, das auch als Zerstäuben oder Vernebeln benannt werden kann. Bevorzugt können Feststoff-Lösungen, Dispersionslösungen, Reinstoffe, Lösungen, Emulsionen oder Suspensionen verwendet werden, besonders bevorzugt Feststofflösungen. Der Aerosolgenerator stößt unter anderem einen Luftstrom aus, wobei der Luftstrom auch Aerosole darstellt, bevorzugt ergänzt um leitfähige Aerosol-Partikel aus einer wässrigen Feststoff-Lösung. Unter dem Begriff "Aerosol-Generator" wird auch ein Emitter verstanden. Die Aerosol-Ausstöße können unter anderem ein Husten, ein Sprechen, ein Atmen und ein Niesen sein. Die Aerosole können bevorzugt kontinuierlich oder periodisch erzeugt und ausgestoßen werden. Die als ein Husten ausgestoßene Aerosol-Menge ist bevorzugt 0,001 - 7 g, besonders bevorzugt 0,001 - 1 g, ganz besonders bevorzugt 0,01 - 1 g. Der Ausstoß der Aerosole kann unter anderem kontinuierlich oder periodisch erfolgen, insbesondere periodisch als Husten in einer Frequenz von bevorzugt 0,001 - 1 Hz, besonders bevorzugt 0,1 - 1 Hz bei einer Länge pro Aerosolausstoß von bevorzugt 0,001 - 1 Min, besonders bevorzugt 0,01 - 20 s, ganz besonders bevorzugt 0,5 - 5 s.

### Zweistoff-Düse

Eine "Zweistoff-Düse" im Sinne der Erfindung ist auch ein Bestandteil des Aerosol-Generators und kann insbesondere zum Dispergieren von Flüssigkeiten, Suspensionen und Lösungen verwendet werden. Ein strömender Gas- oder Dampfmassenstrom dient für den Dispergier-Prozess der Feststoff-Lösung zur Erzeugung und Abgabe der Aerosole mit leitfähigen Aerosol-Partikeln in den Raum. Die Aerosole können besonders hinsichtlich der Aerosol-Partikelgrößenverteilung und der Aerosol-Partikelkonzentration konstant erzeugt werden. Für die vorliegende Erfindung ist eine intern mischende Zweistoff-Düse besonders vorteilhaft.

### Aerosol-Partikelfalle, Aerosol-Partikel-Kanal, Behältnis

Ein "Aerosol-Partikel-Kanal" im Sinne der Erfindung leitet insbesondere die Aerosol-Partikel innerhalb der Vorrichtung der vorliegenden Erfindung. Der Aerosol-Partikel-Kanal ist bevorzugt gasundurchlässig und kann ein Kanal, ein Rohr, ein Schlauch, ein biegsamer Schlauch oder ein länglicher Hohlkörper sein, bevorzugt ein biegsamer Schlauch. Der Fachmann kennt einen Kanal, ein Rohr und einen Schlauch als Leitung zur Förderung fester, flüssiger und/oder gasförmiger Stoffe. Ein biegsamer Schlauch kann ein flexibler zylindrischer Körper mit einem Hohlraum sein.

Eine "Aerosol-Partikelfalle" im Sinne der Erfindung ist auch der Teil der Vorrichtung der Erfindung, der in einem Behältnis das Abscheiden der Aerosol-Partikel aus den Luftströmen in die wässrige Flüssigkeit bewirkt. Die Aufnahme der Aerosol-Partikel enthaltenen wässrige Flüssigkeit aus dem Behältnis erfolgt insbesondere durch den Einströmarm und bevorzugt zur Leitfähigkeit-Messeinheit weitergeleitet. Ein "Behältnis", wie hier verwendet, kann insbesondere ein mit einer Flüssigkeit befüllter Hohlkörper mit mindestens zwei Öffnungen, die bevorzugt gasundurchlässig verschlossen werden können. Die Flüssigkeit bedeckt bevorzugt vollständig oder im Wesentlichen vollständig den Ansaugschutz (20) verbunden mit dem Einströmarm (21) und den Partikelabscheider (15) verbunden mit der Ausströmöffnung (14).

### Partikelabscheidevorrichtung, Partikelabscheider

Eine "Partikelabscheidevorrichtung" ist auch ein Teil der Aerosol-Partikelfalle. Er bewirkt insbesondere durch einen Partikelabscheider auch das Lösen der Aerosol-Partikel in der wässrigen Flüssigkeit aus Luftströmen. Ein "Partikelabscheider" im Sinne der Erfindung wird bevorzugt auch als Filter oder als Zerstäuber bezeichnet und kann vollständig oder im Wesentlichen vollständig von Wasser umgeben sein. Der Partikelabscheider kann beispielsweise ein Filter, ein Kaffeefilter, oder ein Netz sein und kann aus Zellulose, Gewebe, Keramik, Vlies, Naturfasern oder Kunstfasern bestehen, bevorzugt ein Filter aus Zellulose, besonders bevorzugt ein Kaffeefilter aus Zellulose.

### Direkter räumlicher Kontakt

Der Begriff "direkter räumlicher Kontakt" bedeutet im Sinne der Erfindung bevorzugt, dass zwei Objekte sich berühren.

### Schutza usrüstung

Unter dem Begriff "Schutzausrüstung", wie hier verwendet, wird insbesondere jede Ausrüstung verstanden, die dazu bestimmt ist, benutzt oder getragen zu werden, um eine Ausbreitung und/oder Übertragung von Pathogenen und/oder Aerosolen ausgehend von einem infizierten Menschen auf einen anderen Menschen zu reduzieren oder auszuschließen. Der durchschnittliche Fachmann weiß, dass unter Pathogenen krankheitsverursachende Mikroorganismen zu verstehen sind, wobei krankheitsverursachende Mikroorganismen auch Bakterien, Pilze, Einzeller und Viren umfassen, die ihrem Wirt (Menschen, Tieren und Pflanzen) Schaden zufügen können. Die Schutzausrüstung kann unter anderem eine Stoffmaske, eine Schutzmaske genormt oder analog genormt nach EN 136, EN 140 oder EN 149, eine chirurgische Gesichtsmaske, ein Tuch, ein Schal, ein Gesichtsvisier genormt oder analog genormt nach EN 166, ein Mund-Nasen-Schutz, eine mobile Trennwand, eine feste Trennwand, ein Prallblech, ein Raumluftreinigungssystem oder eine Belüftungsanlage sein, bevorzugt eine Gesichtsmaske, ein Prallblech oder eine Stoffmaske.

### Luftstrom-Aufnahme-Komponente

Eine Luftstrom-Aufnahme-Komponente im Sinne der Erfindung weist unter anderem die Komponenten der Erfindung auf, die das Einströmen, die Weiterleitung und das Abscheiden der Aerosol-Partikel aus Luftströmen in die Aerosol-Partikel-Falle bewirkt.

### Maskenkörper, Einströmöffnung

Ein "Maskenkörper" im Sinne der Erfindung kann unter anderem ein Gesichtsmodell, ein Schädelmodell, ein Dummy, eine Attrappe, oder ein Puppenkopf sein, wobei der Maskenkörper mindestens, jedoch nicht ausschließlich, eine Mundöffnung und/oder eine Nasenöffnung darstellende Teile aufweist. Erfindungsgemäß kann eine "Einströmöffnung" am Maskenkörper auch die Mundöffnung und/oder die Naseöffnung zum Einströmen der Aerosol-Partikel und/oder Aerosole in den Teil der Vorrichtung sein, der den Absorber umfasst.

### Ansaugeinheit, Vakuumpumpe, Saugdruck, Volumenstromregelung

Eine "Ansaugeinheit" im Sinne der Erfindung umfasst alle Teile der Vorrichtung, die das Einströmen von Luftströmen mit Aerosol-Partikeln durch die Einströmöffnung vermitteln. Innerhalb der Ansaugeinheit erzeugt eine Pumpe, bevorzugt eine Vakuumpumpe, einen Saugdruck im Maskenkörper, im Aerosol-Partikel-Kanal und in der Aerosol-Partikelfalle. Ein Vakuum kann auch als Unterdruck oder Saugdruck verstanden werden. Der durchschnittliche Fachmann kennt die Technik der "Vakuumpumpe" bevorzugt zur Erzeugung eines Vakuums. Ein "Saugdruck" im Sinne der Erfindung ist unter anderem ein gegen den Luftdruck bevorzugt durch die Vakuumpumpe erzeugter Unterdruck und bewirkt insbesondere die Aufnahme der Luftströme, Aerosole und/oder Aerosol-Partikel in den Absorber. Eine "Volumenstromregelung", wie hier verwendet, kann eine Regelung des Volumenstromes bewirken, insbesondere durch eine Ansteuerung einer eingebauten Drosseleinrichtung. über Änderungen des Druckverlustes. Die Volumenstromregelung hält insbesondere den Volumenstrom unabhängig von schwankenden Umgebungseinflüssen konstant.

### Leitfähigkeit, Ladungsträger, Konduktometrie, Leitfähigkeit-Messeinheit

Begriff "Leitfähigkeit", wie hier verwendet, beschreibt insbesondere die Fähigkeit eines leitfähigen chemischen Stoffes oder Stoffgemisches, Energie oder andere Stoffe oder Teilchen im Raum zu leiten oder zu übertragen. Der durchschnittliche Fachmann kennt die Funktion und den Aufbau eines handelsüblichen Leitfähigkeit-Messgerätes und dass dieses eine Leitfähigkeit-Messsonde und ein Ausgabegerät zur digitalen Anzeige der Messergebnisse umfasst. In der vorliegenden Erfindung ist die "Analyse-Einheit" als das Ausgabegerät zur digitalen Anzeige der Messergebnisse zu verstehen, wobei hier auch ein Computer gemeint sein kann. Der Begriff "Ladungsträger" im Sinne der Erfindung ist auch als ein mit einer Ladung behaftetes Molekül, bevorzugt ein lon, zu verstehen, dass die Leitfähigkeit vermittelt.

Unter einer "konduktometrischen Messung", wie hier verwendet, wird auch Leitfähigkeit-Messung und Konduktometrie verstanden. Wie der Fachmann weiß, ist die konduktometrische Messung auch eine chemisch-physikalische Analysemethode, um die elektrolytische Leitfähigkeit einer flüssigen Probe zu bestimmen. Sie kann insbesondere die dissoziierten Inhaltsstoffe einer Probe und deren Konzentration messen. Unter einer "Messung" wie hier verwendet, wird auch eine Quantifizierung verstanden.

Eine "Leitfähigkeit-Messeinheit" im Sinne der Erfindung ist auch ein Leitfähigkeit-Messgerät und umfasst unter anderem eine Leitfähigkeit-Messsonde und eine Analyseeinheit.

### Messverfahren

Ein "Messverfahren" zur Bestimmung der Aerosol-Partikel kann auch eine Leitfähigkeit-Messung und/oder eine Messung der Licht-Emission unter Verwendung eines Flammenfotometers sein. Das Messverfahren zur Bestimmung der Aerosol-Partikel im Sinne der Erfindung ist bevorzugt eine Leitfähigkeit-Messung.

### kontinuierlich/ periodisch/ einmalig

Der Begriff "periodisch", wie hier verwendet, beschreibt insbesondere einen in einem definierten Zeitraum in gleichen Abständen regelmäßig auftretenden und wiederkehrenden Vorgang. Unter "kontinuierlich" wird auch ein in einem definierten Zeitraum andauernd auftretender Vorgang verstanden. Im Sinne der Erfindung wird ein Vorgang auch als "einmalig" bezeichnet, wenn er einmal ausgelöst wird und in einem undefinierten Zeitraum mit ungleichem Zeitabstand wiederholt ausgelöst werden kann.

### Einströmarm, Ansaugschutz, Pumpe

Ein "Einströmarm", wie hier verwendet, kann insbesondere die Öffnung des Flüssigkeitskanals sein, in den die wässrige Flüssigkeit aus dem Behältnis der Partikelfalle einströmen kann. Ein "Ansaugschutz" im Sinne der Erfindung ist auch ein wasserdurchlässiges Gewebe, das beispielsweise das Eindringen von Staubpartikeln in den Einströmarm verhindert und kann ein Stofffilter oder ein Vliesfilter sein, bevorzugt ein Vliesfilter.

Eine "Pumpe" im Sinne der Erfindung bewirkt unter anderem die Förderung von Flüssigkeiten vom Einströmarm über die Leitfähigkeit-Messeinheit durch den Flüssigkeitskanal zurück in die Aerosol-Partikel -Falle. Die Flüssigkeit kann auch ein Flüssigkeits-Feststoff-Gemisch oder ein Flüssigkeits-Gas-Gemisch sein. Der Fachmann weiß, dass eine solche Pumpe unter anderem, nicht ausschließlich, eine Peristaltikpumpe, eine Kolbenpumpe oder eine Spritzenpumpe sein kann, bevorzugt eine Peristaltikpumpe.

### in situ

Unter "in situ", wie hier verwendet, ist auch "reale Bedingung" und "vor Ort" zu verstehen, wobei jeder Ort insbesondere außerhalb von Laboratorien im Sinne der Erfindung ist, bevorzugt Orte, wo sich mindestens zwei Menschen aufhalten können. Der Fachmann weiß, dass in situ auch "unmittelbar am Ort" bedeutet.

### Infektionskrankheiten, Viren, SARS-COV-2,

Der Begriff "Infektionskrankheit", wie hier verwendet, ist im Sinne der Erfindung auch eine durch den Kontakt und/oder ein Eindringen von Pathogenen in Zellen ausgelöste Krankheit beim Menschen, bevorzugt ausgelöst durch Viren. Der Fachmann weiß, dass unter "Viren" auch organische Strukturen verstanden werden, die sich als Virionen außerhalb von Zellen durch Übertragung verbreiten, aber als Viren nur innerhalb einer geeigneten Zelle vermehren können. Der Fachmann versteht, dass das Eindringen der Viren in Zellen auch als infektiös oder potenziell infektiös bezeichnet werden kann. Es sind verschiedene Familie von human-pathogenen Viren bekannt, wie hier, nicht abschließend, aufgelistet: Coronaviridae, Herpesviridae, Hepadnaviridae, Flaviviridae, Retroviridae, Filoviridae, Orthomyxoviridae, Paramyxoviridae, Pneumoviridae, Rhaboviridae, Adenoviridae, Polyomaviridae, Papillomaviridae, Picornaviridae, bevorzugt im Sinne der Erfindung Coronaviridae. Von den human-pathogenen Coronaviren sind , z.B., ohne Einschränkung, das humane Coronavirus OC43 (HCoV-OC43), das humane Coronavirus HKU1 (HCoV-HKU1), das humane Coronavirus 229E (HCoV-229E), Humanes Coronavirus NL63 (HCoV-NL63), das auf das respiratorische Syndrom des Nahen Ostens bezogenes Coronavirus (MERS-CoV), das Coronavirus des schweren akuten respiratorischen Syndroms (SARS-CoV) und das Coronavirus des schweren akuten respiratorischen Syndroms 2 (SARS-CoV-2) bekannt, bevorzugt SARS-CoV-2.

### Übertragung, simulieren

Der Begriff "Übertragung" von Pathogenen, wie hier verwendet, ist auch als "Ansteckung", "Eindringen", "Übergabe", und "Infektion" zu verstehen, bevorzugt die Übertragung von Viren in Zellen von Menschen. Der Fachmann weiß, dass die Benutzung von human-pathogenen Viren und Virenbestandteilen außerhalb von Laboratorien, um deren Ausbreitung und Übertragung unter Verwendung einer Vorrichtung der Erfindung zu messen, eine inakzeptable Gefährdung darstellt. Die Gefährdung kann insbesondere im direkten zeitlichen Zusammenhang als auch Tage und Wochen nach der Messung bestehen. Eine solche Messung ist auch durch die Biostoffverordnung untersagt. Es können auch Aerosol-Partikel genutzt werden, um insbesondere die Ausbreitung und die Übertragung von Viren zu simulieren, bevorzugt für Coronaviren, noch bevorzugter SARS-CoV-2. Der Begriff "simulieren", ist auch das modellhafte Nachahmen von Sachverhalten und/oder Vorgängen mit technischen Mitteln zur Gewinnung von Erkenntnissen. Bevorzugt simuliert NaCl als Aerosol-Partikel ein Virus in seiner Ausbreitung und Übertragung. Der Fachmann weiß, dass Moleküle und Strukturen sich auch in ähnlicher Weise durch die Luftströmung fortbewegen und ausbreiten können. Unter "ähnlich" kann auch "ein mit demselben oder einem anderen Messverfahren gleiches Ergebnis erzielend", verstanden werden. Unter "Ergebnis" kann bevorzugt die Ausbreitung in Metern verstanden werden, die für eine Übertragung von Pathogenen von einem potenziell infizierten Menschen auf einen anderen Menschen möglich sein könnte.

### ABBILDUNGEN

Die Erfindung wird anhand des Beispiels durch die hier offengelegten Abbildungen veranschaulicht. Die angegebenen Abbildungen stellen besondere, nicht einschränkende Ausführungsformen dar und sind nicht dazu bestimmt, den Schutzbereich der Erfindung einzuschränken.

Kurze Beschreibung der Abbildungen:
**Abbildung 1**: Schema einer ersten bevorzugten Ausführungsform der Vorrichtung
**Abbildung 2**: Anordnung der Besucherblöcke in einem Konzertsaal.
**Abbildung 3a: Schematische und bildliche Darstellung einer Sitzanordnung von Aerosol-Generator und Absorber bei Versuchsmessungen in einem Konzertsaal für die Abbildungen 3b-6.**
**Abbildung 3b: Auswertung** - **Einfluss vom Sitzabstand im Block A in einem Konzertsaal.**
**Abbildung 4: Auswertung** - **Vergleich Mittelwerte Sitzpositionen.**
**Abbildung 5a: Auswertung** - **Ein Konzertsaal bei laufender Belüftungsanlage und ein durchschnittlicher Konferenzraum im Vergleich**
**Abbildung 5b: Auswertung** - **Ein Konzertsaal bei abgeschalteter Belüftungsanlage und ein durchschnittlicher Konferenzraum im Vergleich**
**Abbildung 6: Vergleich** - **Verschiedene Schutzausrüstungen, die die Einströmöffnung am Maskenkörper bedecken**

Detaillierte Beschreibung der Abbildungen
**Abbildung 1: Schema einer ersten bevorzugten Ausführungsform der Vorrichtung.** Schematische Darstellung einer Ausführungsform der Vorrichtung, die einen Absorber und einen Aerosol-Generator umfasst.
**Abbildung 2: Anordnung der Besucherblöcke im Konzertsaal in einem Konzertsaal.** Die Versuchsreihe (markiert mit Kreisen) in einem Konzertsaal soll die Ausbreitung und Übertragung von Aerosolen in Abhängigkeit einer Belüftung, der Verwendung von Schutzmasken und Sitzplatzabständen.
**Abbildung 3a: Schematische und bildliche Darstellung einer Sitzanordnung von Aerosol-Generator und Absorber bei Versuchsmessungen in einem Konzertsaal für die Abbildungen 3b-6.** Die Abbildung links illustriert die Sitzabstände der Absorber bei der NaCl-Aufnahme. Der Aerosol-Generator und der Absorber sind während der in Abbildung 3b-6 gezeigten Messung in Schaufensterpuppen (rechts) eingesetzt.
**Abbildung 3b: Auswertung** - **Einfluss vom Sitzabstand im Block A in einem Konzertsaal.** Die Abbildung zeigt den Einfluss des Sitzabstandes für den Block A in einem Konzertsaal. Dazu werden die NaCI-Aufnahmen der Absorber aus Abbildung 3a für die Sitzabstände "kein", "1" und "2" miteinander verglichen. Ein fehlender Sitzplatzabstand erzeugt bei allen Absorbern die größte NaCI-Aufnahme. Des Weiteren lässt sich für den Absorber Links (L) der höchste NaCI-Anstieg erkennen. Dieser NaCI-Anstieg ist überraschend auf die im Block A vorherrschende Luftströmung durch die Belüftungsanlage zurückzuführen.
**Abbildung 4: Auswertung** - **Vergleich Mittelwerte Sitzpositionen.** Die Abbildung zeigt durchschnittliche NaCI-Aufnahme pro Absorber für verschiedene Besucher-Blöcke in einem Konzertsaal im Vergleich zu einem durchschnittlichen Konferenzraum. Verglichen werden die Abstände von einem oder zwei Sitzplätzen zwischen den Schaufensterpuppen, dem Absorber und dem Aerosol-Generator. Die Gesamtmenge des aufgenommenen Aerosols für jeden betrachteten Testfall nimmt bei Verringerung des Abstandes zu.
**Abbildung 5a: Auswertung** - **Ein Konzertsaal bei laufender Belüftungsanlage und ein durchschnittlicher Konferenzraum im Vergleich.** In diesen Graphen ist die Leitfähigkeit über die Zeit für die Absorber aufgetragen. Der grundlegende Messablauf bestand aus einem Vorlauf von 6 Minuten zur Ermittlung der Grundsteigung, anschließend erfolgte durch den Aerosol-Generator ein Aerosolausstoß über 8:20 Minuten. Im Nachlauf wurde über circa 20 Minuten der Verlauf der Leitfähigkeit gemessen. Im Vergleich der Graphen zwischen einem Konzertsaal und einem Konferenzraum ist zu sehen, dass durch die Belüftungsanlage und die Größe des Saals in einem Konzertsaal im Nachlauf der Anstieg nach dem Aerosolausstoß stark abnimmt. Im Konferenzraum hingegen bleibt der Raum gesättigt und die Leitfähigkeit in den Absorbern steigt weiter stark an.
**Abbildung 5b: Auswertung** - **Ein Konzertsaal bei abgeschalteter Belüftungsanlage und ein durchschnittlicher Konferenzraum im Vergleich.** Im Unterschied zu Abbildung 5a wurde bei dieser Versuchsmessung die Belüftungsanlage in einem Konzertsaalabgeschaltet (Belüftungsstufe 0). Grundlegend sind ähnliche Verläufe, jedoch mit unterschiedlichen Anstiegen zu beobachten. Der Hauptunterschied liegt im Nachlauf. Nach Abschalten des Aerosol-Generators ist ein höherer Anstieg der Leitfähigkeit bei Belüftungsstufe 0 im Vergleich zu Belüftungsstufe 2 zu sehen. Im Vergleich zum Konferenzraum relativiert sich dieser Unterschied wieder und ist in einem Konzertsaal bei Belüftungsstufe 0 nach wie vor wesentlich kleiner.
**Abbildung 6: Vergleich** - **Verschiedene Schutzausrüstungen, die die Einströmöffnung am Maskenkörper bedecken.** In der Abbildung ist die NaCI-Aufnahme von zwei Absorbern unter Verwendung verschiedener Schutzausrüstungen, genauer Schutzmasken, gegenübergestellt. Verglichen werden dabei die Konfigurationen der Absorber ohne Maske, mit Chirurgenmaske, mit Stoffmaske und mit FFP2-Maske. Ersichtlich wird aus dem Diagramm, dass die Absorber ohne Maske am meisten NaCl aufnehmen. Die Effizienz von Chirurgen- und Stoffmasken sind für diese Untersuchung in etwa ähnlich. Eine geringere und somit höhere Effizienz zeigten die FFP2-Masken in dieser Messung.

### BEISPIELE

Die Erfindung wird anhand der hier offengelegten Beispiele demonstriert. Die angegebenen Beispiele stellen besondere Ausführungsformen dar und sind nicht dazu bestimmt, den Umfang der Erfindung einzuschränken. Die Beispiele sind als eine nicht einschränkende Veranschaulichung und technische Unterstützung für die Ausführung der Erfindung zu betrachten.

Das folgende Beispiel 1 zeigt eine Ausführungsform der Vorrichtung der Erfindung. Beispiel 2 stellt die Verwendung der Vorrichtung in einem Konzertsaal dar zur Einschätzung der Ausbreitung und Übertragung potenziell infektiöser Viren während eines Konzertes bei verschiedenen Sitzplatzabständen, Variation der Belüftung und Verwendung von Schutzausrüstung.

### Beispiel 1: Schema einer ersten bevorzugten Ausführungsform der Vorrichtung, die einen Aerosol-Generator und einen Absorber umfasst.

In der in Abbildung 1 gezeigten Vorrichtung ist eine bevorzugte Ausführungsform der Vorrichtung als Schema dargestellt. Die Vorrichtung der vorliegenden Erfindung umfasst einen Absorber und einen Aerosol-Generator. Der Absorber in der bevorzugten Ausführungsform trägt der eine Gesichtsmaske, die am Maskenkörper die Einströmöffnung überdeckt. Der Aerosol-Generator ist ohne Schutzausrüstung in dieser bevorzugten Ausführungsform dargestellt.

**Bezugsverzeichn isliste**

| | |
|---|---|
| 1 | Aerosol-Generator |
| 2 | Zweistoff-Düse |
| 3 | Feststoff-Lösung |
| 4 | Aerosol-Partikel |
| 5 | Maskenkörper |
| 6 | Schutzausrüstung |
| 7 | Luftstrom-Aufnahme-Komponente |
| 8 | Ansaugeinheit |
| 9 | Aerosol-Partikelfalle |
| 10 | Leitfähigkeit- Messeinheit |
| 11 | Einströmöffnung |
| 12 | Aerosol-Partikel-Kanal |
| 13 | Partikelabscheidevorrichtung |
| 14 | Ausströmöffnung |
| 15 | Partikelabscheider |
| 16 | Lufteinstrom |
| 17 | Volumenstromregler |
| 18 | Vakuumpumpe |
| 19 | Behältnis |
| 20 | Einströmarm |
| 21 | Ansaugschutz |
| 22 | Flüssigkeitskanal |
| 23 | Pumpe |
| 24 | Leitfähigkeit- Messsensor |
| 25 | Analyse-Einheit |

### Beispiel 2: Verwendung der Vorrichtung in einem Konzertsaal dar zur Einschätzung der Ausbreitung und Übertragung potenziell infektiöser Viren während eines Konzertes (Abb. 2-6)

### Material und Methoden

Die Untersuchung eines Konzertsaals (Abb. 2, 3a) erfolgte durch eine Rauchausbreitungsmessung, um die Raumströmung zu visualisieren und repräsentative Sitzpositionen zu ermitteln. Anhand der Ergebnisse wurden fünf Sitzblöcke für die Untersuchung der Ausbreitung von Aerosolen ausgewählt (Abb. 2). Die Messung wurde mit einem Aerosol-Generator und fünf Absorbern durchgeführt (Abb. 3a). Der Aerosol-Generator wird dabei auf einen mittigen Sitzplatz positioniert und dient als Basis für die Positionierung der Absorber. Die Absorber werden je nach Konfiguration in einem Abstand von 0, 1 oder 2 Sitzplätzen sternförmig um den Aerosol-Generator positioniert. Vor dem Aerosol-Generator wird in 2 cm Entfernung zur Mundöffnung ein Prallblech mit einer Größe von 10 cm x 10 cm positioniert. Das Prallblech simuliert das Husten in die Hand oder die Armbeuge. Zu Beginn der Messung wird die Aufzeichnung der Messwerte begonnen und die Vakuumpumpe der Absorber eingeschaltet. Die Messwerte werden während der gesamten Messung mit einer Frequenz von 1 Hz mit einem Leitfähigkeitsmessgerät aufgezeichnet. Über eine Kalibriermessung wird der Anstieg der Leitfähigkeit auf die Aufnahme des Markers in mg umgerechnet. Mit den Absorbern wird nun 6 Minuten lang der Grundanstieg im Raum als Referenz gemessen, um eventuelle Störungen und Aerosole identifizieren. Nach 6 Minuten wird der Aerosolausstoß des Aerosol-Generators für einen Zeitraum von 8 Minuten und 20 Sekunden durchgeführt. Nach dem Stopp der Aerosolabgabe wird die Messung für einen Zeitraum von 20-30 Minuten weitergeführt, um die Aerosolverteilung und den Abtransport des Aerosols zu erfassen. Der Messablauf ist in Abbildung 5a dargestellt. Nach Abschluss der Messung wurde über die Absorber bestimmt, wann kein Aerosol mehr nachweisbar war und die folgende Messung gestartet werden konnte. Während der Messung wurden die Parameter Belüftungsstufe von 0-3, Abstand der Absorber vom Aerosol-Generator (0-2 Sitzplätze), das Tragen eines Mundnasenschutzes mit den Parametern ohne Maske, mit Chirurgenmaske, mit Stoffmaske und mit FFP2-Maske, Aerosol-Generator mit oder ohne Prallblech, das Einschalten von 20 Heizkissen mit einer Leistung von je 100W in entsprechenden Sitzabständen um den Aerosol-Generator, variiert. (Abb. 2-6)

Als Referenzmessung wurde ein Konferenzraum mit circa 33 m2 Grundfläche und 100 m2 Luftvolumen untersucht. Der Raum war nicht belüftet. Die Absorber wurden sternförmig mit einem Abstand von 1,5 m zum Aerosol-Generator positioniert.

### Ergebnisse

Die Messwerte werden als Konzentrationsanstieg über die Zeit dargestellt. In der Auswertung wird der ermittelte Grundanstieg der 6 Minuten von den Messwerten abgezogen, um nur die vom Aerosol-Generator hinzugefügten Aerosole zu bestimmen. Als zusätzliche Auswertung wird die Gesamtmenge des aufgenommenen Markers für die verschiedenen Messungen visualisiert. Dabei wird zusätzlich zwischen der durchschnittlichen und der maximalen Aufnahme der Puppen unterschieden. Außerdem wird die Ableitung der Konzentration bestimmt, um die Aufnahme pro Zeit zu untersuchen und den Abtransport des Aerosols zu visualisieren.

Die Messungen im Konzertsaal wurden mit den Messungen im Konferenzraum verglichen (Abb. 5a und 5b). In beiden Fällen wurden durch den Aerosol-Generator für den gleichen Zeitraum Aerosole abgegeben. Nach einer kurzen Verzögerung ist ein deutlicher Anstieg der Konzentration an den Absorbern zu beobachten. Nach dem Stopp der Aerosolabgabe zeigt sich jedoch ein deutlicher Unterschied der beiden Fälle. Im Konzertsaal wird nach einer kurzen Zeit von wenigen Minuten keine weitere Aerosolaufnahme mehr gemessen. Im Konferenzraum hingegen ist nach dem Ende der Emission nur ein leichter Rückgang der Aerosolkonzentration in der Luft am Ort des Absorbers zu beobachten. Auch 30 Minuten nach Ende der Emission der Aerosole wurden hier noch etwa 50% der maximalen Aerosolkonzentration im Raum gemessen. Die beobachteten Unterschiede sind auf die Belüftungsanlage im Konzertsaalzurückzuführen. Durch die gleichmäßige Verteilung der Zuluft unter den Sitzplätzen wird das Aerosol schnell verdünnt und nach oben verdrängt, wie es auch schon in der Sichtbarmachung beobachtet wurde. Im Konferenzraum findet keine Belüftung statt, wodurch das Aerosol über einen langen Zeitraum in der Raumluft verbleibt beziehungsweise sich bei weiterer Emission dort kontinuierlich anreichern kann. Die Belüftungsanlage im Konzertsaal führt also auch zu einer zeitlichen Eingrenzung einer möglichen Exposition freigesetzter Aerosole. Große Aerosolkonzentrationen, die beispielsweise durch ein Husten oder Niesen erzeugt werden können, werden zügig abtransportiert.

Abbildung 3b gibt die Gesamtaerosolmenge an, die von Absorbern in unterschiedlichen Messungen über einen Zeitraum von circa 30 Minuten aufgenommen wurde, wenn der Aerosol-Generator für einen definierten Zeitraum Aerosol in den Raum freisetzte. Dort zeigt sich, dass die mittlere Aerosolaufnahme im Konzertsaal bei einem freien Sitz Abstand weniger als ein Drittel der mittleren Aufnahme im Konferenzraum beträgt. Durch die Klimatisierung im Konzertsaal ist daher nur mit einer räumlich sehr begrenzten Übertragung von Aerosolen zu rechnen, wobei die maximalen Mengen nicht die mittleren Werte in einem üblichen Konferenzraum mit 1,5 m Abstand überschreiten. Die Messungen zeigen, dass die Klimatisierung im Konzertsaal sowohl zu einer räumlichen als auch einer zeitlichen Beschränkung der Aerosolübertragung führt. Mit größeren Abständen nehmen die übertragenen Aerosolmengen sehr stark ab und durch die kontinuierliche Zuluft ist die Verweilzeit von Aerosolen in Kopfhöhe des Publikums sehr kurz. Daher ist eine Ansteckung einer großen Gruppe von Personen durch eine einzelne erkrankte Person, ein sogenanntes Superspreading, nahezu ausgeschlossen.

Die leichte Bewegung der Raumluft führt weiterhin zu einer gerichteten Ausbreitung der Aerosole. Das heißt ausgehend vom Aerosol-Generator werden die Aerosole verstärkt zu einem Sitznachbarn getragen, was zu einer erhöhten Aerosolaufnahme einzelner Absorber führen kann. Die maximal gemessenen Werte sind dabei aber vergleichbar mit der Aerosolaufnahme in einem gewöhnlichen Konferenzraum bei Einhaltung eines Abstandes von 1,5 m. Eine Einzelansteckung ist damit ähnlich wahrscheinlich wie bei einer Situation am Arbeitsplatz unter Einhaltung der gängigen Hygieneregeln.

### Literatur

¹ W. H. Coulter, U. S. Patent No. 2656508 (1953).

## Patentansprüche

1. Vorrichtung zur konduktometrischen Messung einer in situ simulierten Virusausbreitung in Aerosolen umfassend:
a. einen Aerosol-Generator (1) mit einer Zweistoff-Düse (2) zur Erzeugung von Luftströmen mit leitfähigen Aerosol-Partikeln (3),
b. eine Luftstrom-Aufnahme-Komponente (7),
c. eine Ansaugeinheit (8) mit einer Vakuumpumpe (18) zur Erzeugung eines Saugdrucks in der Luftstrom-Aufnahme-Komponente (7),
d. eine Aerosol-Partikelfalle (9) mit einem Behältnis (19) für eine Flüssigkeit verbunden mit der Luftstrom-Aufnahme-Komponente (7) und
e. eine Leitfähigkeit-Messeinheit (10) mit einer Pumpe (23) und einer Leitfähigkeit-Messsonde (24) für die Bestimmung der Leitfähigkeit, wobei die Leitfähigkeit-Messeinheit (10) mit der Aerosol-Partikelfalle (9) verbunden ist.

2. Vorrichtung nach Anspruch 1, **dadurch gekennzeichnet, dass** die leitfähigen Aerosol-Partikel (4) mindestens einen Ladungsträger enthalten, bevorzugt Salze oder äquivalente Verbindungen, noch bevorzugter NaCl.

3. Vorrichtung nach einem der vorherigen Ansprüche, **dadurch gekennzeichnet, dass** der Aerosol-Generator (1) einen Lufteinstrom (16) ergänzt um leitfähige Aerosol-Partikel (4) aus einer wässrigen Feststoff-Lösung (3) ausstößt.

4. Vorrichtung nach einem der vorherigen Ansprüche, **dadurch gekennzeichnet, dass** die leitfähigen Aerosol-Partikel (4) eine Größe von 0,01 µm bis 500 µm, bevorzugt 0,1 µm bis 100 µm, noch bevorzugter 0,1 µm bis 50 µm aufweisen.

5. Vorrichtung nach einem der vorherigen Ansprüche, **dadurch gekennzeichnet, dass** die Luftstrom-Aufnahme-Komponente (7) einen Maskenkörper (5) mit mindestens einer Einströmöffnung (11), eine Partikelabscheidevorrichtung (13) und mindestens einen Aerosol-Partikel-Kanal (12) umfasst.

6. Vorrichtung nach einem der vorherigen Ansprüche, **dadurch gekennzeichnet, dass** der Maskenkörper (5) mit der Einströmöffnung (11) vollständig oder teilweise von einer Schutzausrüstung (6) bedeckt sein kann.

7. Vorrichtung nach einem der vorherigen Ansprüche, **dadurch gekennzeichnet, dass** die Ansaugeinheit (8) einen Volumenstromregler (17) und mindestens einen Aerosol-Partikel-Kanal (12) verbunden mit der Aerosol-Partikelfalle (9) umfasst, wobei der Volumenstromregler (17) einen Volumenstrom zwischen 0 - 100 l/min, bevorzugt 0 - 30 l/min, noch bevorzugter 12-18 l/min erzeugt.

8. Vorrichtung nach einem der vorherigen Ansprüche, **dadurch gekennzeichnet, dass** der Aerosol-Partikel-Kanal (12) am ersten Ende eine Einströmöffnung (11) ausbildet und am zweiten Ende mit der Partikelabscheidevorrichtung (13) in Verbindung steht, wobei die Partikelabscheidevorrichtung (13) eine Ausströmöffnung (14) und einen Partikelabscheider (15) umfasst.

9. Vorrichtung nach einem der vorherigen Ansprüche, **dadurch gekennzeichnet, dass** ein direkter räumlicher Kontakt zwischen der Partikelabscheidevorrichtung (13) und der Aerosol-Partikelfalle (9) besteht, wobei dieser räumliche Kontakt ein vollständiger direkter Kontakt der Partikelabscheidevorrichtung (13) mit der Flüssigkeit enthalten im Behältnis (19) darstellt.

10. Vorrichtung nach einem der vorherigen Ansprüche, **dadurch gekennzeichnet, dass** die Flüssigkeit im Behältnis (19) eine wässrige Flüssigkeit ist, wobei die wässrige Flüssigkeit bevorzugt de-ionisiertes Wasser ist.

11. Vorrichtung nach einem der vorherigen Ansprüche, **dadurch gekennzeichnet, dass** die Leitfähigkeit-Messeinheit einen Einströmarm (20), einen Ansaugschutz (21), mindestens einen Flüssigkeitskanal (22), eine Pumpe (23), einen Leitfähigkeit-Messsensor (24) und eine Analyseeinheit (25) umfasst.

12. Vorrichtung nach einem der vorherigen Ansprüche, **dadurch gekennzeichnet, dass** der Flüssigkeitskanal (22) an einem ersten Ende einen Einströmarm (20) ausbildet und an einem zweiten Ende mit dem Leitfähigkeit-Messsensor (24) in direktem Kontakt steht.

13. Vorrichtung nach einem der vorherigen Ansprüche, **dadurch gekennzeichnet, dass** ein direkter räumlicher Kontakt zwischen dem Einströmarm (20) und der Aerosol-Partikelfalle (9) besteht, wobei dieser räumliche Kontakt ein vollständiger direkter Kontakt des Einströmarmes (20) mit der Flüssigkeit enthalten im Behältnis (19) darstellt.

14. Verfahren zur konduktometrischen Messung einer in situ simulierten Virusausbreitung in Aerosolen in einer Vorrichtung nach Anspruch 1-13.

15. Verfahren nach Anspruch 14, **dadurch gekennzeichnet, dass** die leitfähigen Aerosol-Partikel (4) durch die Vorrichtung nach einem der Ansprüche 1-13 geleitet werden.

16. Verfahren nach Anspruch 14-15, **dadurch gekennzeichnet, dass** die leitfähigen Aerosol-Partikel (4) über die Partikelabscheidevorrichtung (13) durch direkten Kontakt mit dem Partikelabscheider (15) in der wässrigen Flüssigkeit gelöst werden können.

17. Verfahren nach Anspruch 16, **dadurch gekennzeichnet, dass** die Leitfähigkeit der wässrigen Flüssigkeit einmalig und/oder kontinuierlich gemessen werden kann.

18. Verwendung der Vorrichtung nach Anspruch 1-13 zur konduktometrischen Messung einer in situ simulierten Virusausbreitung in Aerosolen, wobei die simulierten Viren bevorzugt Viren für Infektionskrankheiten sind, noch bevorzugter Corona-Viren, noch bevorzugter SARS-COV-2 Viren.
